# EUROPEAN PATENT SPECIFICATION

(11) **EP 4 237 697 B1**
(45) Date of publication and mention of the grant of the patent: **08.10.2025**
(21) Application number: 21885401.6
(22) Date of filing: 20.10.2021
(51) Int. Cl.: F16C 3/02, F16C 23/04, F16C 23/08, F16C 27/06, F16F 15/02

(54) **SUPPORT ARRANGEMENT FOR ROTATING SHAFT**
TRÄGERANORDNUNG FÜR DREHWELLE
AGENCEMENT DE SUPPORT POUR ARBRE TOURNANT

(30) Priority: 27.10.2020 DK PA202070708
(43) Date of publication of application: 06.09.2023
(73) Proprietor: Component 2.0 A/S, 2970 Hørsholm (DK)
(72) Inventor: RASMUSSEN, Janus Juul, 3200 Helsinge (DK); LARSEN, Asger Meng, 3520 Farum (DK)
(74) Representative: Nordic Patent Service A/S
(86) International application number: PCT/DK2021/050313
(87) International publication number: WO 2022/089701

(56) References cited:
- EP-A2- 0 310 821
- WO-A1-2016/008958
- WO-A1-2016/008958
- DE-A1- 4 023 183
- GB-A- 1 095 598
- KR-A- 20030 048 613
- US-A- 2 530 323
- US-A- 3 015 523
- US-A- 3 015 523
- US-A- 3 756 675
- US-A- 3 756 675
- US-A- 4 236 426
- US-A- 4 236 426
- US-A- 4 639 150
- US-A1- 2007 211 980
- US-A1- 2008 116 316
- US-A1- 2016 305 475

## Description

### TECHNICAL FIELD

The disclosure relates to a support arrangement for rotating components such as a shaft.

### BACKGROUND

Mechanical systems having rotating components, such as rotating shafts use radial load bearings and axial load bearings to support such a rotating component.

High load radial load bearings and axial load bearings need to be perfectly aligned to avoid premature wear or failure.

Further, rotating components often experience oscillation related problems due to, e.g., mechanical unbalance or misalignment between components, coupled with the eigenfrequencies of the shaft.

Eigenfrequencies are the frequencies at which a system tends to oscillate and are generally undesirable during operation of the system. The support structure, typically a housing, is therefore to be manufactured very precisely, with the requirement for precision increasing for every bearing added to the shaft. Further, this position is to be maintained under load. Thus, the support structure needs to be extremely stiff. These factors increase manufacturing costs.

All rotating shafts will, to some extent, have an unbalanced mass creating resonant vibration when the shaft's rotational speed is close, or equal to, its eigenfrequencies, which is also known as the critical speed. The magnitude of shaft deflection depends upon factors such as the stiffness of the shaft and its support, the distance between supports, the distributed mass of the shaft and attached components, any unbalance of the mass with respect to the axis of rotation, the shape of the shaft, and the amount of damping in the system.

In general, it is necessary to calculate the critical speed of the rotating shaft, as the critical speed is the speed of rotation which excites resonant vibrations, i.e. the eigenfrequencies, of the shaft.

As the speed of rotation of the shaft approaches the shaft's eigenfrequency, the shaft begins to resonate, leading to a dramatic increase in system vibration and, possibly, noise.

Furthermore, such shaft vibration imposes additional load on other components such as bearings, couplings, gears, etc., which might eventually lead to catastrophic failure of the mechanical system.

One solution to avoid exciting the eigenfrequencies of the shaft is simply to design the system such that the maximum speed is lower than the lowest critical speed, or in an interval between critical speeds. However, this greatly limits the usefulness of the mechanical system.

The problem of eigenfrequency excitation can, instead, be mitigated by adding several bearings or bearing arrangements, along the rotating shaft in order to dampen any radial vibrations. However, this creates a different set of problems, as the bearings need to be aligned very precisely, which is a very expensive and time-consuming process. Additionally, bearing alignment may deteriorate over the years due to use. Furthermore, when overconstraining the shaft by increasing the number of bearings, there is an increased risk of misalignment between bearings, and tolerance stack-up.

US4229058A discloses a self-aligning clutch release bearing assembly comprising a rolling element bearing having a rotary race, which in use engages with a clutch member, and a non-rotary race mounted on a support for transmission of a clutch release load. The non-rotary race is relatively movable on the support transversely to the rotary axis of the bearing assembly to permit in use self alignment of the rotary axis: of the bearing with rotary axis of the clutch member. This movement is controlled by a layer of viscous material interposed between the support and the non-rotary race. The viscous material exhibits some resilience and up to a given value resistance to plastic flow so that the material locates the non-rotary race but allows it to move to achieve self-alignment on operation of the clutch in use.

US2016281817A1 discloses a dynamic damper for a drive shaft that is used to transmit power generated by a vehicle engine to a wheel. Vibration is generated by the drive shaft applied to a medium-sized or small-sized vehicle when the drive shaft is rotated at a high speed. In this drive shaft, resonant frequency of a long shaft is 120 to 130HZ, and resonant frequency of a short shaft is 260 to 300 Hz. In general, the resonant frequency matches with a portion vulnerable to acceleration noise and vibration of the vehicle, which mainly causes deterioration in noise, vibration and harshness (NVH) performance. In order to solve the problem regarding the vibration, a dynamic damper, which is adapted to the resonant frequency, is mounted on the drive shaft to reduce vibration and noise.

WO2016/008958 A1 shows a rotary shaft assembly according to the preamble of claim 1.

### SUMMARY

It is an object to provide a support structure for a rotating shaft that overcomes, or at least reduces, the problem mentioned above. The foregoing and other objects are achieved by the features of the independent claims. Further implementation forms are apparent from the dependent claims, the description, and the figures.

According to a first aspect, there is provided a rotating shaft arrangement comprising a shaft having an axial extent,
said shaft being radially supported by a first self-aligning radial load rotary bearing assembly and radially supported by a second self-aligning radial load rotary bearing assembly,
said second self-aligning radial load rotary bearing being axially spaced from said first self-aligning radial load rotary bearing assembly, and said shaft being axially supported by a first self-aligning axial load rotary bearing, the first self-aligning axial load bearing assembly comprising: a first member with a first wall, said first wall having a substantially radial main extent and a second member with a second wall, said second wall having a substantially radial main extent, said first wall being axially spaced from said second wall, a chamber formed between walls of said assembly, an outer circumferential wall surrounding said chamber, said chamber being confined in all directions by walls of said assembly, said first or second wall being configured for supporting said rotary bearing or for forming a bearing surface of said axial load rotary bearing, a first lump of a substantially incompressible material filling said chamber, with the chamber substantially completely enclosing said lump.

By providing a rotating shaft with both self-aligning radial load bearings and a self-aligning axial load bearing, the structure in which the bearings are supported can be produced with relatively low manufacturing precision and with high tolerance is, i.e. inexpensive, whilst the bearings are without alignment problems. In many applications, a major part of the production cost is to ensure that the housing rather support structure provides a very accurate basis for the bearings, so the bearings may be completely aligned and therefore last the time that they are designed to last. The inventors realized that applying such high production precision is very costly and realized that applying self-aligning bearings for both the radial load and for the axial load on the shaft will in many cases provide a less expensive solution.

According to a possible implementation of the first aspect, said first lump is formed of a material with a Poison's ratio of approximately 0,5.

According to a possible implementation of the first aspect, there is a first narrow gap between said outer circumferential wall and at least one of said first wall or said second wall, said narrow gap being either an annular gap or a radial gap and wherein there is a second narrow gap between said inner circumferential wall and at least one of said first wall or said second wall, said second narrow gap being either an annular gap or a radial gap.

According to a possible implementation of the first aspect, said first self-aligning bearing radial load bearing assembly comprises an outer sleeve and an inner sleeve at least partially disposed in said outer sleeve, said inner sleeve having an axially extending bore for supporting a rotary or linear bearing or for forming a bearing surface of a radial load rotary or linear bearing, three or more circumferentially separated chambers formed between said inner sleeve and said outer sleeve, each chamber being substantially confined in all directions by walls of said assembly, a second lump of a substantially incompressible material filling each of said at least three chambers, with the chamber concerned substantially completely enclosing said lump.

According to a possible implementation of the first aspect, rotating shaft arrangement comprises damping arrangement configured for damping radial vibrations in said rotating shaft, said damping arrangement engaging said shaft at an axial position located between said first self-aligning radial load rotary bearing assembly and said second self-aligning radial load rotary bearing assembly.

According to a possible implementation of the first aspect, said damping arrangement comprises: at least one first damping element, at least one second damping element, and a bearing arrangement operably engaging said first damping element and said second damping element.

According to a possible implementation of the first aspect, said bearing arrangement comprises: a first bearing member, a second bearing member, and a reference, at least partially arranged in a nesting configuration.

According to a possible implementation of the first aspect, said first bearing member is rotatably mounted on said shaft so that radial movement of said shaft is transferred to said first bearing member.

According to a possible implementation of the first aspect, said first bearing member is operably connected to said second bearing member by said first damping element and by a first steering structure.

According to a possible implementation of the first aspect, said first steering structure allows only reciprocating movement of said first bearing member, and said shaft, in a first radial direction, and said first damping element dampening said reciprocating movement in said first radial direction with respect to said second bearing member, said second bearing member being operably connected to said reference by said second damping element and by a second steering structure.

According to a possible implementation of the first aspect, said second steering structure allows only reciprocating movement of said second bearing member, said first bearing member (6), and said shaft, in a second radial direction D2, and said second damping element dampening said reciprocating movement in said second radial direction with respect to said reference.

According to a possible implementation of the first aspect, said first self-aligning radial load bearing, said second self-aligning radial load bearing, and said damping arrangement share a center axis, said first self-aligning radial bearing and said second self-aligning radial load bearing being separated by a distance (d3) along said center axis, said damping arrangement(s) being arranged between said first bearing and said second bearing at a location, along said center axis, where the radial vibrations of said shaft have a maximum amplitude.

According to a possible implementation of the first aspect, said first self-aligning radial load rotary bearing assembly is a self-aligning mainly radial load bearing assembly, and/or
said second self-aligning radial load rotary bearing assembly is a self-aligning mainly radial load bearing assembly, and/or
said first self-aligning axial load rotary bearing self-aligning mainly axial load bearing assembly.

The function of the axial bearing is to distribute loads evenly, even when the load is misaligned in relation to the underlying structure. In the self-aligning bearing support assembly, the lump provides high axial stiffness and a low rotational stiffness around the two axes in the plane of the assembly.

The inventor arrived at the insight that it would be possible to provide an axially stiff support that provides low resistance to rotation about the two axes in the plane of the assembly by exploiting the characteristic of most (viscous) fluids of incompressibility and a virtual absence of resistance to slow deformation. However, such bearing support would require hermetically sealed chambers filled with a suitable liquid. Suitable liquids are plentiful. However, sealing the chambers hermetically is a significant technical challenge.

The inventor arrived at the further insight that materials such as e.g. natural rubber, synthetic rubber, and other elastomers behave like a liquid in that they are substantially incompressible and provide little resistance to deformation, and at the insight that a chamber filled with such material would not need to be hermetically sealed to obtain the desired effect.

By providing a chamber filled with a lump of substantially incompressible solid material that essentially behaves like a liquid it is possible to provide a bearing support assembly that is stiff in the axial direction i.e. the load direction whilst it is flexible for accommodating rotational misalignments since the first member is allowed rotation relative to the second member about the two axes in the plane of the assembly, thereby avoiding bending moments on the thrust bearing. The lump is restrained in the chamber, thereby rendering the bearing axially stiff. Axial displacement of the inner sleeve relative to the outer sleeve requires compression of the lump, which is not possible since the lump is entrapped in the chamber.

According to a possible implementation form of the first aspect the total volume of the chamber changes when the first member moves axially relative to the second member.

The self-aligning axial load bearing assembly is rigid to compression in the axial direction. Since the support assembly only can handle compression load, an axial load bearing that needs to accommodate axial loads in both directions requires two oppositely arranged support assemblies.

According to a possible implementation form of the first aspect, the total volume of the chamber does not change when the first member rotates relative to the second member about a radial axis through the assembly. Thus, with a deformable lump, there is relatively little resistance to rotation about any radial axis through the assembly

According to a possible implementation form of the first aspect, the first wall is arranged oppositely to the second wall.

According to a possible implementation form of the first aspect, the lump resists volume changes of the chamber, thereby rendering the support assembly rigid in the axial direction to compression loads.

According to a possible implementation form of the first aspect, the first member is allowed to rotate relative to the second member about a radial axis through the assembly, thereby deforming the lump without compressing the lump.

According to a possible implementation form of the first aspect, the first member is prevented from moving axially relative to the second member, due to the lump resisting compression.

According to a possible implementation form of the first aspect, the lump is formed of a polymer or an elastomer, preferably natural or synthetic rubber, or a mixture thereof.

According to a possible implementation form of the first aspect, the lump is disk-shaped or ring-shaped.

According to a possible implementation form of the first aspect, the outer circumferential wall is an integral part of the first member or of the second member.

According to a possible implementation form of the first aspect, the chamber is defined by the first wall, the second wall, and the outer circumferential wall.

According to a possible implementation form of the first aspect, the assembly comprises an inner circumferential wall, the inner circumferential wall preferably being an integral part of the first member or of the second member.

According to a possible implementation form of the first aspect, the chamber is defined by the first wall, the second wall, the outer circumferential wall, and the inner circumferential wall.

According to a possible implementation form of the first aspect, there is a first narrow gap between the outer circumferential wall and at least one of the first wall or the second wall, the narrow gap being either an annular gap or a radial gap.

According to a possible implementation form of the first aspect, there is a second narrow gap between the inner circumferential wall and at least one of the first wall or the second wall, the second narrow gap being either an annular gap or a radial gap.

The inventor arrived at the insight that it would be possible to provide a radially stiff support that provides low resistance to angular rotation by exploiting the characteristic of most (viscous) fluids of incompressibility and virtual absence of resistance to slow deformation. However, such a bearing support would require hermetically sealed chambers filled with a suitable liquid. Suitable liquids are plentiful. However, sealing the chambers hermetically is a significant technical challenge.

The inventor arrived at the further insight that materials such as e.g. natural rubber, synthetic rubber, and other elastomers behave like a liquid in that they are substantially incompressible and provide little resistance to deformation, and at the insight that a chamber filled with such material would not need to be hermetically sealed to obtain the desired effect.

By providing a plurality of chambers filled with a lump of substantially incompressible solid material that essentially behaves like a liquid it is possible to provide a bearing support that is stiff in the radial direction i.e. the load direction whilst it is flexible for accommodating axial misalignments since the inner sleeve is allowed angular rotation about a central point in two orthogonal directions relative to the outer sleeve, thereby avoiding bending moments on the bearing. The lump is restrained in the chamber, thereby rendering the bearing radially stiff. Radial displacement of the inner sleeve relative to the outer sleeve would require compression of at least one of the lumps, which is not possible since the lump is entrapped in the chamber.

The bearing support can form a bearing with the inner surface of the inner sleeve forming a bearing surface or the bearing support can a bushing for supporting a bearing that is supported by the inner surface of the inner sleeve.

In a possible implementation form of the first aspect, the lump is restrained in all directions by the chamber.

In a possible implementation form of the first aspect, the chamber prevents expansion of the pad in all directions.

In a possible implementation form of the first aspect rotation about a midpoint of the bearing assembly changes the shape of the chambers without changing the volume of the chambers, thereby deforming the lumps concerned in the chambers without changing the volume of the lumps concerned in the chambers.

In a possible implementation form of the first aspect, an axial midpoint of each of the chambers is axially aligned with the axial midpoint MC of the other chambers.

In a possible implementation form of the first aspect, the assembly is configured for allowing rotation of the inner sleeve relative to the outer sleeve about a radial axis R contained in a radial plane that intersects with the main axis A at an axial midpoint M of the assembly, the (axial) midpoint M of the assembly preferably being aligned with the axial midpoint (MC) of the chambers.

In a possible implementation form of the first aspect, the lump is formed of a polymer or an elastomer, preferably natural or synthetic rubber or a mixture thereof.

In a possible implementation form of the first aspect, the lump is a pad, preferably a curved pad.

In a possible implementation form of the first aspect, the assembly comprises axially extending separators between two circumferentially neighboring chambers for circumferentially dividing a space between the inner sleeve and the outer sleeve into the at least three circumferentially separated chambers. Thus, expansion of the lump in a circumferential direction is prevented.

In a possible implementation form of the first aspect the separators extend along the complete axial extent of the chambers and wherein the separators have a radial extent that at least almost covers the radial extent of the chambers.

In a possible implementation form of the first aspect, the separators have two oppositely directed circumferentially facing surfaces that each form a side of a neighboring chamber.

In a possible implementation form of the first aspect, a separator is an integral part of the outer sleeve or an integral part of the inner sleeve.

In a possible implementation form of the first aspect, a separator is partially received in an axially extending groove in the outer sleeve and/or in an axially extending groove in the inner sleeve.

In a possible implementation form of the first aspect, the separators form the circumferential boundaries of the chambers.

In a possible implementation form of the first aspect, the outer sleeve and/or the inner sleeve are provided with a preferably circumferentially noncontinuous first flange and/or second flange, the first flange preferably being axially spaced from the second flange by the axial extent of the chambers, and the first flange and/or the second flange preferably having a radial extent that is slightly less than the radial extent of the chambers.

In a possible implementation form of the first aspect, the first flange and the second flange form the axial boundaries of the chambers and prevent axial expansion of the lumps.

In a possible implementation form of the first aspect, the chambers are symmetrically arranged around the main axis A and around the midpoint M of the assembly. This aids in assuring that the bearing support behaves uniformly in response to loads.

In a possible implementation form of the first aspect, the lumps all have an identical shape, size, and material properties. This aids in assuring that the bearing support behaves uniformly in response to loads.

In a possible implementation form of the first aspect, the number of chambers is a multiple of four. This aids in assuring that the bearing support behaves uniformly in response to loads.

In a possible implementation form of the first aspect, the chambers and the lumps are substantially arch-shaped. This aids in rendering the bearing support compact.

In a possible implementation form of the first aspect, the substantially incompressible material of the lumps is isotropic. This aids in rendering the characteristics of the bearing support uniform with respect to response to any type of load.

In a possible implementation form of the first aspect, the lump is formed of a substantially incompressible isotropic material, which when deformed elastically at small strains has a Poisson's ratio of approximately 0,5.

In a possible implementation form of the first aspect, the center of inertia of the lumps is located in the midpoint of the bearing support assembly. This aids in assuring that the bearing support behaves uniformly in response to loads.

In a possible implementation form of the first aspect, the midpoint of the bearing assembly is axially and radially medially located in the bearing assembly. This aids in assuring that the bearing support behaves uniformly in response to loads.

This damping arrangement allows radial vibrations of the shaft to be dampened, and hence system vibration and noise to be avoided, by providing a bearing arrangement having built-in radial dampening. This allows a rotating shaft to be supported by the damping arrangement according to the first aspect and combined with significantly fewer bearings than prior art solutions, which require a plurality of bearings arranged along the entire length of the shaft. By using only a damping arrangement according to the first aspect, there is no longer a need for precisely aligning a large number of bearings, making the damping arrangement not only less expensive but also more reliable than prior art solutions, since alignment preciseness during assembly, and use, is no longer an issue.

In a possible implementation of the first aspect, the first bearing member is rotatably mounted on the shaft to allow the first bearing member the shaft to rotate relative to the first bearing member, a rotation axis of the shaft preferably corresponding to a center axis of the shaft. This prevents any misalignment between the first bearing member and the shaft arising due to said rotation.

In a possible implementation form of the first aspect, the first bearing member and the second bearing member are configured to self-align, with respect to each other in the first radial direction and in the second radial direction, in response to the radial vibrations, preventing any permanent misalignment between the first bearing member and the second bearing member, and subsequently the second bearing member and the shaft.

In a possible implementation form of the first aspect, the first bearing member and the second bearing member form a sliding bearing.

In a possible implementation form of the first aspect, the bearing arrangement is an Oldham coupling.

In a possible implementation form of the first aspect, the second direction is angularly spaced from the first direction, preferably by an angle of at least 45° and most preferably by an angle of approximately 90°, such a distribution preventing the shaft from bending in the first direction.

In a possible implementation form of the first aspect, the second direction extends perpendicular to the first direction and to a center axis of the shaft.

In a possible implementation form of the first aspect, the first bearing member and the second bearing member share center axes with the shaft.

In a possible implementation form of the first aspect, the radial vibrations of the shaft generate reciprocating movement of the first bearing member in the first direction and/or the second direction, and/or reciprocating movement of the second bearing member in the second direction, facilitating response to radial vibrations in several, preferably all, radial directions.

In a possible implementation form of the first aspect, the first bearing member is movably arranged along the first direction and the second direction, and the second bearing member is fixedly arranged along the first direction.

In a possible implementation form of the first aspect, the first damping element is at least partially located between the first bearing member and the second bearing member to dampen reciprocating movement of the first bearing member in the first direction, and the second damping element is at least partially located between the second bearing member and the reference to dampen reciprocating movement of the second bearing member in the second direction. This locks the rotation of the first bearing member to the reference and uses the relative motion between the first bearing member and the second bearing member and between the second bearing member and the reference to dampen oscillations by the means of damping elements.

In a possible implementation form of the first aspect, at least radial vibrations having a first eigenfrequency, and optionally a second eigenfrequency, are dampened by the damping arrangement, such that system vibration and noise is kept to a minimum.

In a possible implementation form of the first aspect, the first damping element and the second damping element are one of a single-acting and a double-acting damping element, allowing the damper arrangement to be configured in response to the space available and manufacturing cost restrictions.

In a possible implementation form of the first aspect, the damping arrangement comprises two first damping elements arranged along the first direction, on diametrically opposite sides of the center axis, allowing the dampening to be executed in two opposite directions by means of simple and reliable damping elements.

In a possible implementation form of the first aspect, the damping arrangement comprises two second damping elements arranged along the second direction, on diametrically opposite sides of the center axis, allowing the dampening to be executed in two further, opposite directions by means of simple and reliable damping elements.

In a possible implementation form of the first aspect, the first bearing member, the second bearing member, and the reference are substantially prismatic in shape.

In a possible implementation form of the first aspect, the first damping element and the second damping element comprises a fluid, allowing the dampening to be executed in opposite directions by means of very simple and easily replaceable damping elements.

In a possible implementation form of the first aspect, the first bearing member and the second bearing member comprise peripherally extending recesses configured to accommodate the fluid, the peripherally extending recesses extending in outer circumferential surfaces of the first bearing member and the second bearing member. The cavities formed by the recessed surfaces of the first bearing member and the second bearing member contain the fluid and allows the fluid to provide sufficient load-carrying capacity in the radial direction.

In a possible implementation form of the first aspect, the reciprocating movement of the first bearing member in the first direction has a maximum amplitude of ±25 % of a shaft diameter from the center axis, and/or the reciprocating movement of the second bearing member in the second direction has a maximum amplitude of ±25 % of a shaft diameter from the center axis, allowing dampening of radial vibrations in a majority of mechanical systems requiring such dampening, without inducing too much stress on the damping arrangement or shaft.

In a possible implementation form of the first aspect, the first steering structure and/or the second steering structure comprise at least two slidingly engaging steering elements, the steering elements preferably being one groove and one protrusion. This is a cost-effective and highly reliable solution that limits any movement to two opposite directions along one axis.

In a possible implementation form of the first aspect, the second bearing member comprises a plurality of grooves, at least one first groove being part of the first steering structure, and at least one second groove being part of the second steering structure, the first bearing member comprises at least one first protrusion engaging the first groove, and the reference comprises at least one second protrusion engaging the second groove, allowing a simple and reliable interconnection between the parts of the bearing arrangement, which still allows radial movement.

In a possible implementation form of the first aspect, the reference comprises at least one axial stop configured to prevent the first bearing member and the second bearing member from moving axially along the shaft, with respect to the reference, such that the dampening arrangement is maintained at its initial location along the shaft and, hence, the dampening effect on the shaft also maintained.

According to a second aspect, there is provided a rotating shaft arrangement comprising a shaft, a first bearing, a second bearing, and the damping arrangement according to the above, the shaft, the first self-aligning radial load bearing assembly, the second self-aligning radial load bearing assembly, and the damping arrangement sharing a center axis, the first self-radial load bearing assembly and the second self-aligning radial load bearing assembly being separated by a distance along the center axis, the damping arrangement being arranged between the first bearing and the second bearing at a location, along the center axis, where the radial vibrations of the shaft have a maximum amplitude.

This type of shaft arrangement allows radial vibrations of the shaft to be dampened, and hence system vibration and noise to be avoided, by means of only one damping arrangement arranged at the location of the shaft which is the most affected by radial vibrations. Furthermore, the arrangement is kinematically determined in that there is no generation of parasitic loads regardless of issues such as tolerances, misalignment, etc. within the arrangement. The damping arrangement is a floating damper arrangement resisting only radial velocity and can thus be considered a pure damper.

In a possible implementation form of the second aspect, the radial vibrations have a sinusoidal waveform, a maximum amplitude of the sinusoidal waveform corresponding to the maximum amplitude of the radial vibrations.

In a further possible implementation form of the second aspect, when the radial vibrations of the shaft are equal to a first eigenfrequency, the maximum amplitude arises equidistantly between the first bearing and the second bearing along the center axis, and, preferably, the damping arrangement is arranged equidistantly between the first bearing and the second bearing in order to dampen the radial vibrations at the point of maximum amplitude.

In a further possible implementation form of the second aspect, when the radial vibrations of the shaft are equal to a second eigenfrequency, the maximum amplitudes arise at 1/4*distance from the first bearing and 1/4*distance from the second bearing, and, preferably, the damping arrangements are offset along the shaft such that they are arranged at 1/4*distance from the first bearing and 1/4*distance from the second bearing, in order to dampen the radial vibrations at all points of maximum amplitude.

In a further possible implementation form of the second aspect, when the radial vibrations of the shaft are equal to a third eigenfrequency, the maximum amplitudes arise equidistantly between the first bearing and the second bearing along the center axis, at 1/4*distance from the first bearing, and at 1/4*distance from the second bearing, and, preferably, the damping arrangements are arranged equidistantly between the first bearing and the second bearing, at 1/4*distance from the first bearing, and at 1/4*distance from the second bearing, in order to dampen the radial vibrations at all points of maximum amplitude.

In a further possible implementation form of the second aspect, the first bearing and/or the second bearing is a ball bearing, such as a spherical ball bearing, a journal bearing, or a magnetic bearing.

These and other aspects will be apparent from and the embodiment(s) described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1A is a diagrammatic illustration of a rotating shaft arrangement according to prior art;
Fig. 2A is a diagrammatic illustration of a rotating shaft arrangement in accordance with an embodiment;

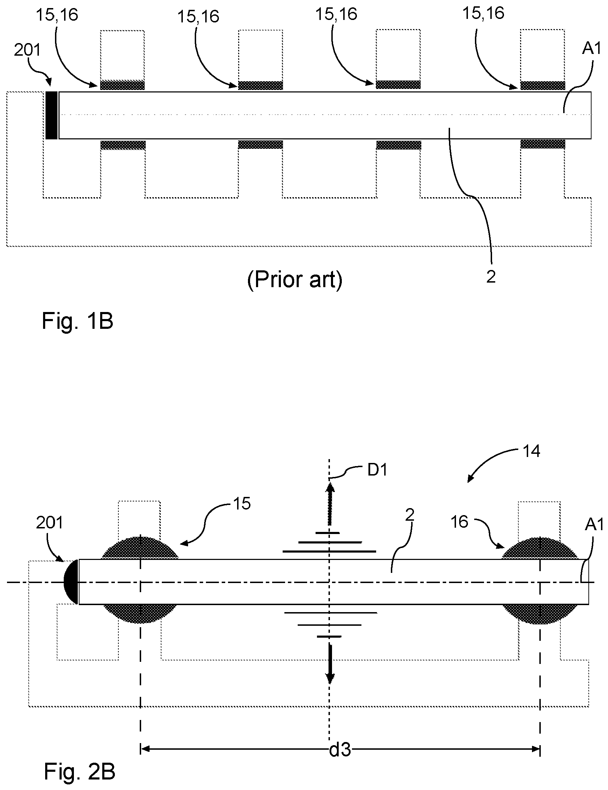

Fig. 1B is another diagrammatic illustration of a rotating shaft arrangement according to prior art;
Fig. 2B is a diagrammatic illustration of a rotating shaft arrangement in accordance with another embodiment;

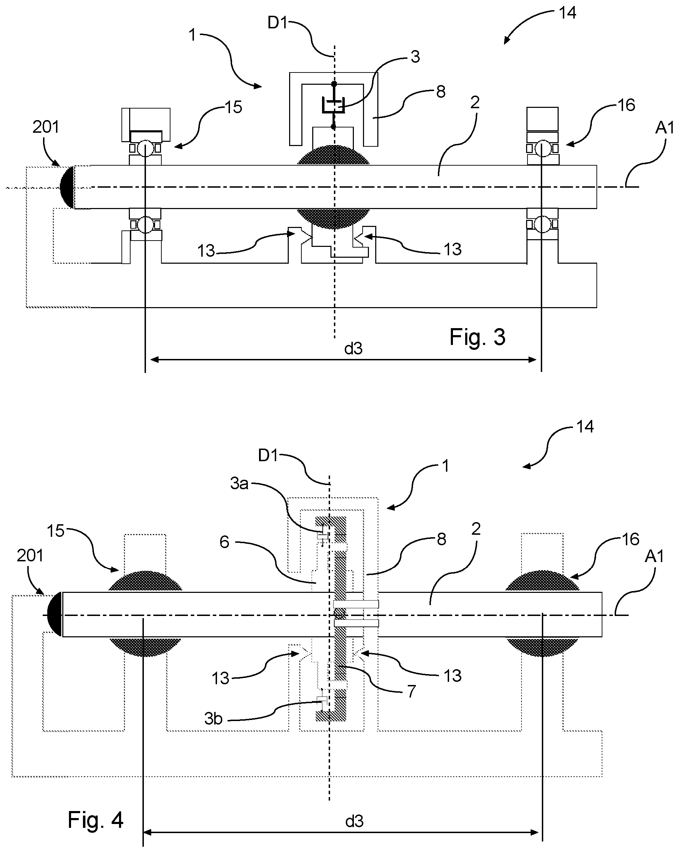

Fig. 3 shows a longitudinal cross-section of a rotating shaft arrangement in accordance with an embodiment;
Fig. 4 shows a longitudinal cross-section of a rotating shaft arrangement in accordance with a further embodiment;

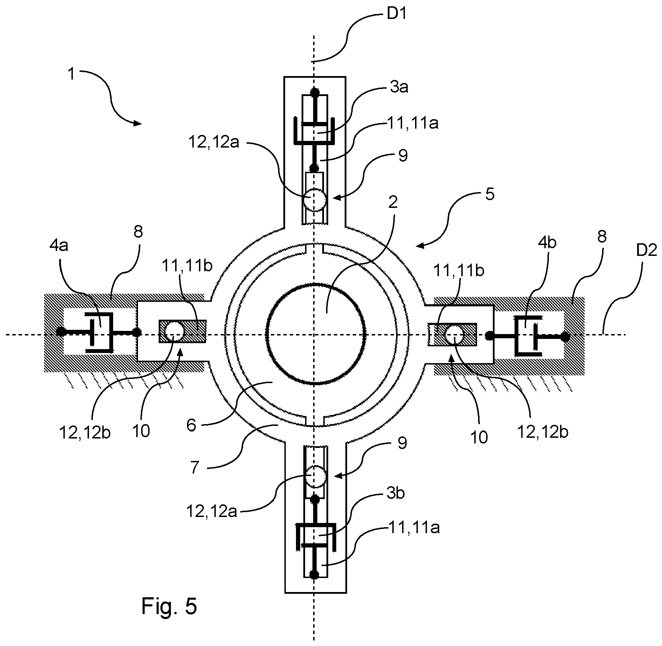

Fig. 5 shows a transverse cross-section of a rotating shaft arrangement in accordance with an embodiment n;

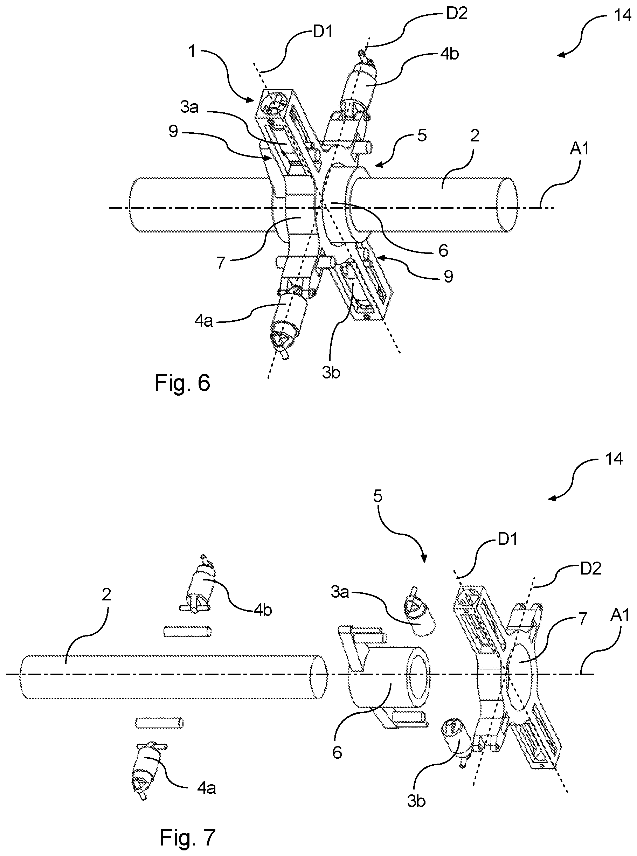

Fig. 6 shows a perspective view of a rotating shaft arrangement in accordance with an embodiment when arranged on a shaft;
Fig. 7 shows an exploded view of the embodiment of Fig. 6;

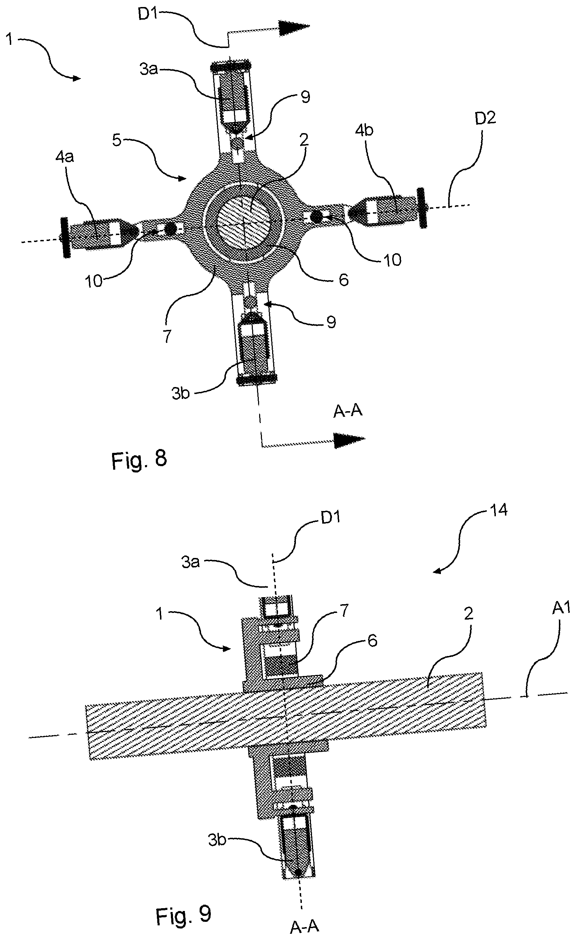

Fig. 8 shows a transverse cross-section of a rotating shaft arrangement in accordance with an embodiment;
Fig. 9 shows a longitudinal cross-section of the embodiment of Fig. 8.

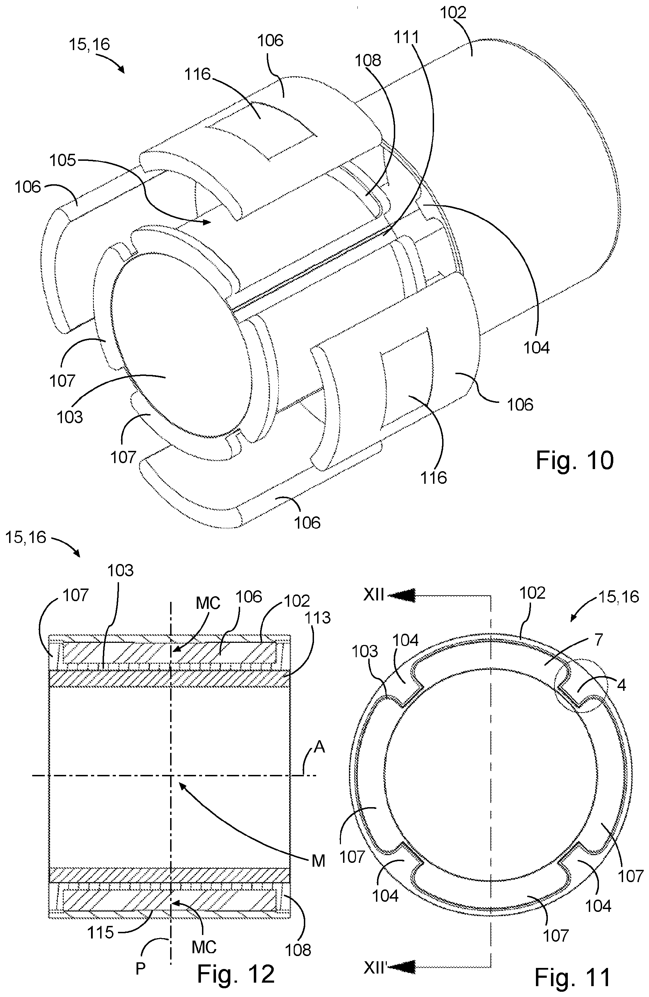

Fig. 10 is an elevated exploded view of a bearing support assembly according to an embodiment,

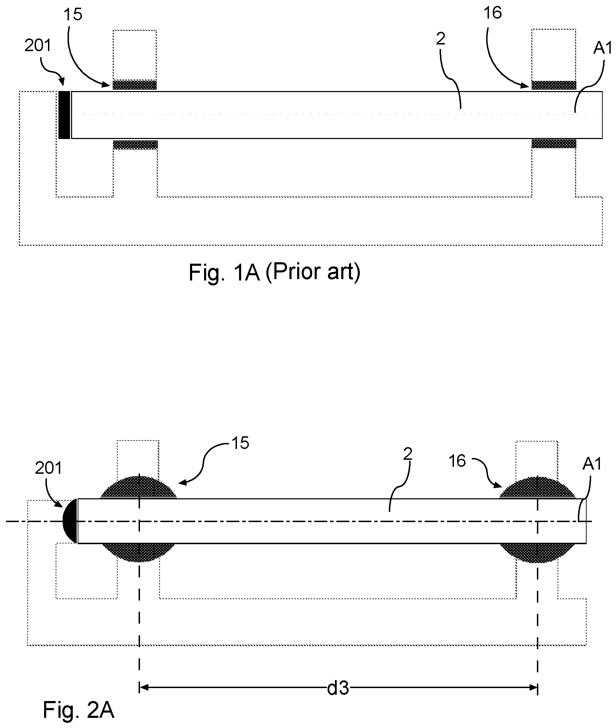

Fig. 11 is an end view of the bearing support assembly of Fig. 1,
Fig. 12 is a sectional view of the bearing support assembly of Fig. 1 along the plane XII - XII' of Fig. 11,

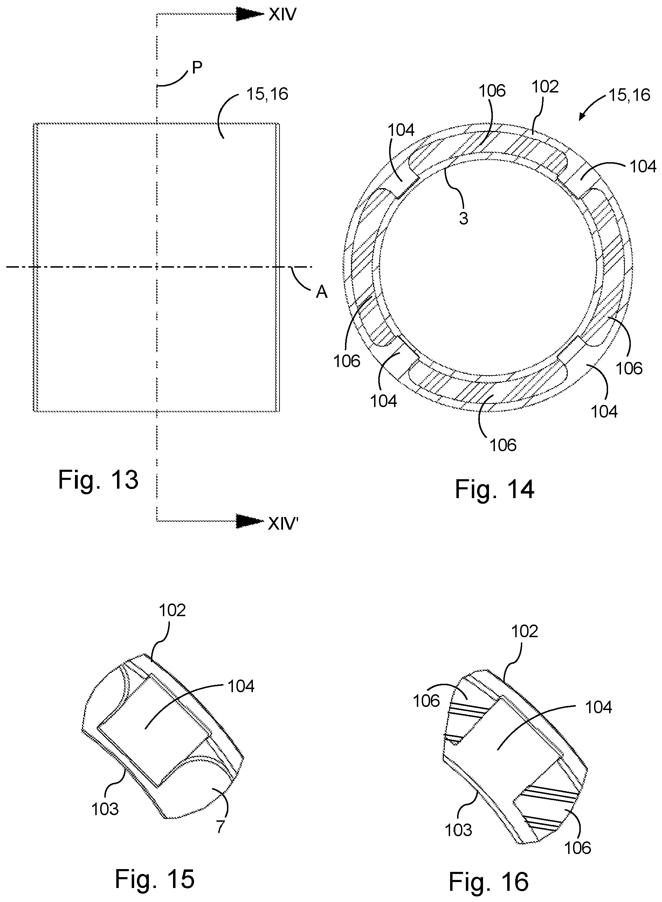

Fig. 13 is a side view of the bearing support assembly of Fig. 10,
Fig. 14 is a cross-sectional view of the bearing support assembly of
Fig. 1 along the plane XIV - XIV' of Fig. 13,
Figs. 15 and 16 are enlarged details of alternative embodiments,

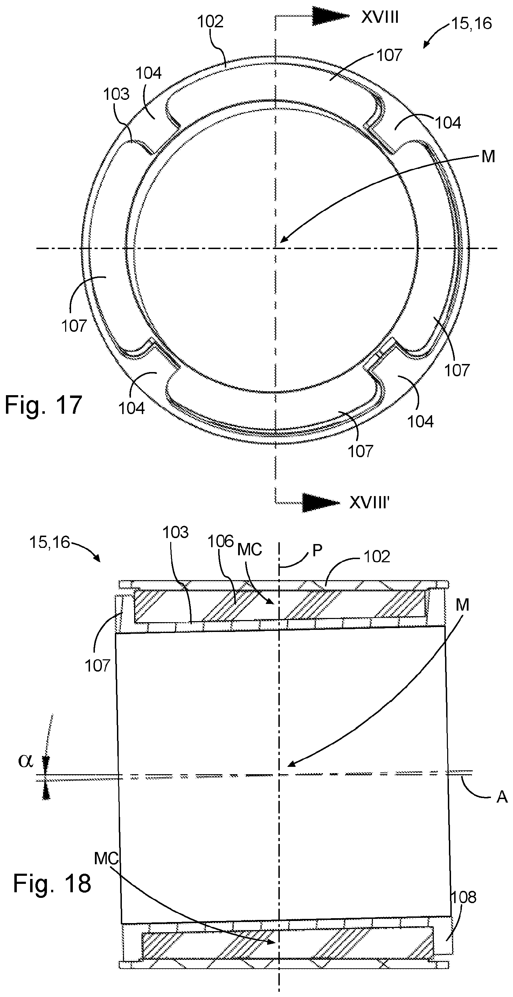

Fig. 17 is an end view of the bearing support assembly of Fig. 10,
of Fig. 18 along the plane XVIII - XVIII' of Fig. 17 illustrating the angular rotation of the inner sleeve relative to the outer sleeve of the bearing assembly,

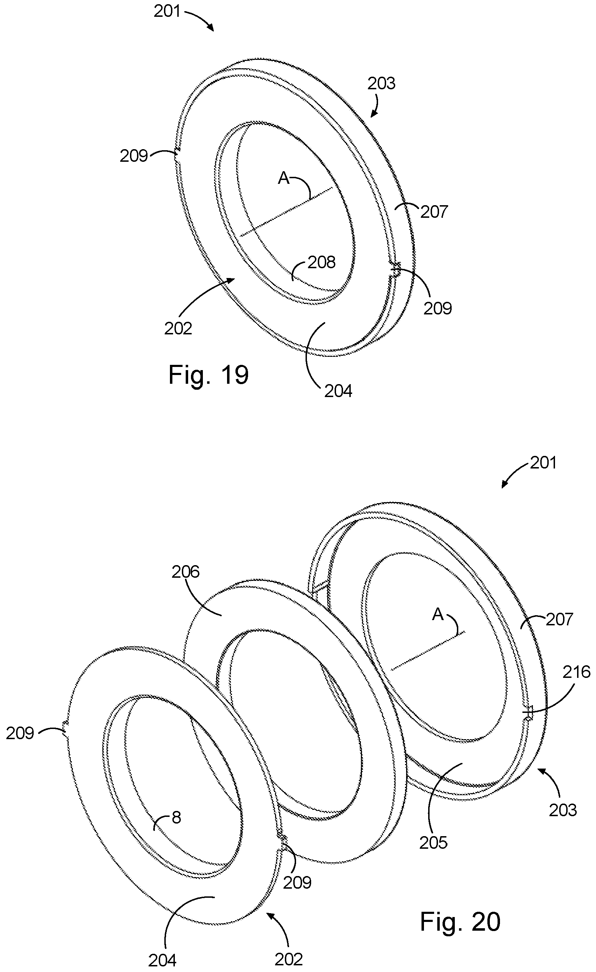

Fig. 19 is an elevated view of an axial load bearing support assembly according to an embodiment,
Fig. 20 is an elevated exploded view of a bearing support assembly of Fig. 19,

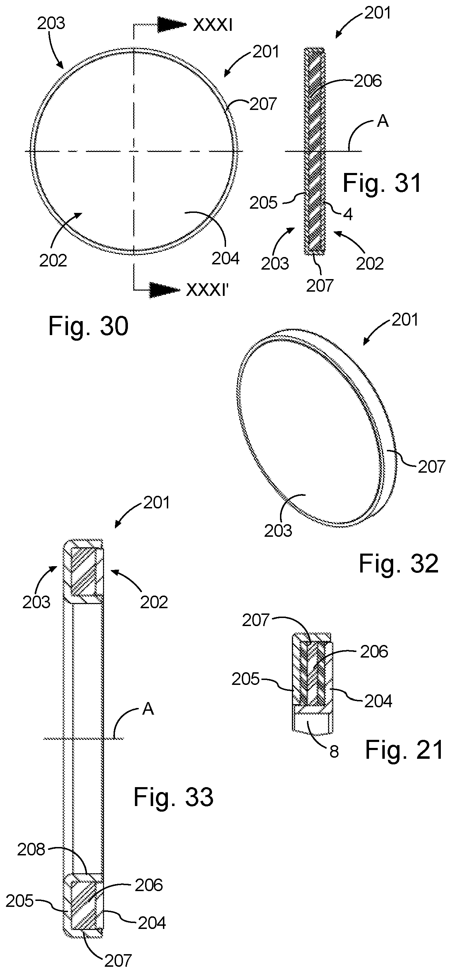

Fig. 21 is a cross-sectional view of a detail of a variation of the bearing support assembly of Fig. 19,

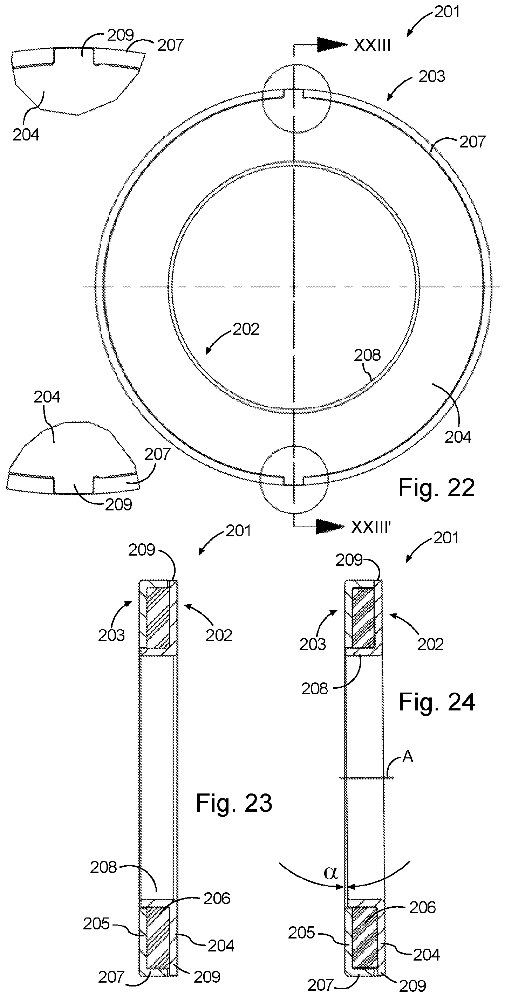

Fig. 22 is a side view of the bearing support assembly of Fig. 19 and including two enlarged details of the bearing support assembly,
Fig. 23 is a sectional view of the bearing support assembly of Fig. 1 along the plane XXIII - XXIII' of Fig. 23,
Fig. 24 is a cross-sectional view of the bearing support assembly of Fig. 1 along the plane XXIII - XXIII' of Fig. 23, illustrating angular rotation of a first member relative to a second member of the bearing assembly,

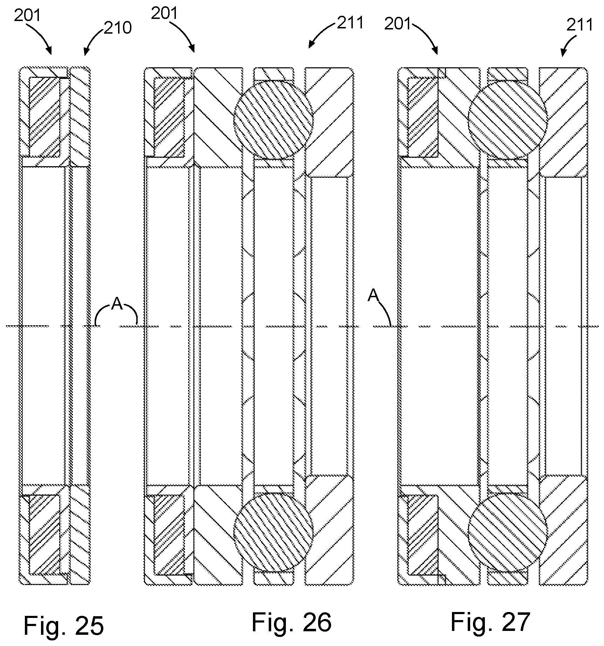

Figs. 25 is a cross-sectional view of the bearing assembly of Fig. 19 supporting an axial load slide bearing,
Fig. 26 is a cross-sectional view of the bearing assembly of Fig. 19 supporting an axial load roller bearing,
Fig. 27 is a cross-sectional view of a bearing support assembly according to an embodiment that is an integral part of an axial load roller bearing,

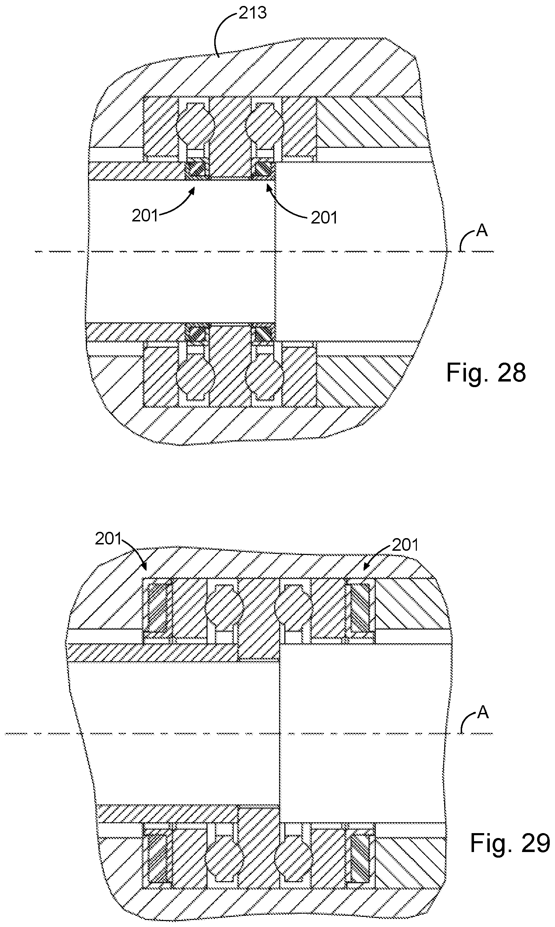

Fig. 28 is a cross-sectional view of a bearing assembly comprising two oppositely arranged axial load roller bearings supported by two oppositely arranged axial bearing support assemblies according to an embodiment,
Fig. 29 is a cross-sectional view of a bearing assembly comprising two oppositely arranged axial load roller bearings supported by two oppositely arranged axial bearing support assemblies according to another embodiment,
Fig. 30 is a side view of a detail of an axial bearing support according to yet another embodiment.
Fig. 31 is a cross-sectional view of the axial bearing support assembly of Fig. 12 along the plane XXXI - XXXI' of Fig. 30,
Fig. 32 is an elevated view of an axial bearing support assembly according the embodiment of Fig. 30,
Fig. 33 is a cross-sectional view of an axial bearing support according to another embodiment.

### DETAILED DESCRIPTION

Fig. 1A shows a known rotating shaft arrangement comprising a shaft 2 and two radial load bearings 15, 16 arranged along the center axis A1 of the shaft 2 and one axial load bearing 201. Such a rotating shaft arrangement may be part of machine systems such as turbine generators and internal combustion engines and may be used as driveshafts in road vehicles, as propulsion shafts in ships, as fan shafts, or as crankshafts, to name a few. Such shafts typically have an axial load thereon and a radial load and accordingly need to be supported by at least two radial load bearings 16 and by at least one axial load bearing 201. Thus, although herein labeled as a shaft, any rotating object supported by 2 radial load bearings 15 and axial load bearing is herein considered to be a shaft.

High load bearings, such as plain bearings or cylinder needle bearings allow only for a minimal misalignment. Consequently, the support structure (housing) needs to be manufactured very precisely, i.e. with low tolerances, thus increasing production costs. Further, the high load will tend to deform the support structure and thus misalign the bearings even if the support structure is manufactured precisely, and thus, the support structure needs to be very stiff to avoid deformation of the support structure and thus to avoid misalignment of the bearings. The need to provide a very stiff support structure further increases manufacturing costs.

Fig. 2A is a diagrammatic illustration of a rotating shaft arrangement 1 according to an embodiment. The radial load bearings 15,16 are placed by self-aligning radial load bearings. The axial load bearing 201 is replaced by a self-aligning axial load bearing. Inaccurate bearing alignment due to manufacturing tolerances and in a bearing alignment due to deformation
of the support structure (because e.g. a load) is compensated for by the self-aligning capacity of the radial load and axial load bearings. Examples of radial load bearings 15, 16, and of axial load bearings 201 that are suitable for use in the rotating shaft arrangement 1 are described in detail further below.

Fig. 1B shows a known rotating shaft arrangement comprising a shaft 2 and a plurality of radial load bearings 15,16 arranged along the center axis A1 of the shaft 2 and one axial load bearing 201. Such a rotating shaft arrangement may be part of machine systems such as turbine generators and internal combustion engines and may be used as driveshafts in road vehicles, as propulsion shafts in ships, as fan shafts, or as crankshafts, to name a few. Such shafts typically have an axial load thereon and a radial load and accordingly need to be supported by at least two radial load bearings 16 and by at least one axial load bearing 201. Such rotating shafts 2 are subject to radial vibrations, e.g. due to mechanical unbalance or misalignment between components, resonating with the eigenfrequencies of the shaft 2, which vibrations are often mitigated using a multitude of bearings 15,16 placed along the shaft 2 as shown in Fig. 1.

The embodiment shown diagrammatically in Fig. 2B relates to a rotating shaft arrangement 14 comprising a shaft 2, a first self-aligning radial load bearing 15, a second self-aligning radial load bearing 16, and a damping arrangement 1 which is described in detail further below. The shaft 2 is preferably a prismatic shaft made of an isotropic material, prismatic meaning the cross-section of the shaft being constant throughout its length.

The first self-aligning radial load bearing 15 and the second self-aligning radial load bearing 16 carry the shaft 2 and are separated by a distance d3 along the center axis A1. Preferably, the first bearing 15 and the second bearing 16 are located at, or adjacent, opposite ends of shaft 2. The rotating shaft arrangement 14 may comprise more than one damping arrangement 1, however, the paragraphs below describe a rotating shaft arrangement 14 comprising only one damping arrangement 1 for the sake of clarity. The rotating shaft arrangement 14 may also comprise more than two self-aligning radial load bearings 15, 16.

The shaft 2, the first self-aligning radial load bearing 15, the second bearing 16, and the damping arrangement 1 all share a center axis A1, i.e. the first self-aligning radial load bearing 15, the second self-aligning radial load bearing 16, and the damping arrangement 1 are arranged in at least partial alignment around the shaft 2.

The damping arrangement 1 is preferably arranged between the first self-aligning radial load bearing 15 and the second self-aligning radial load bearing 16, along the center axis A1, at a location where the radial vibrations of the shaft 2, have a maximum amplitude, hence giving a maximum damping effect. The radial vibrations may have a sinusoidal waveform, such that the maximum amplitude of the sinusoidal waveform corresponds to the maximum amplitude of the radial vibrations both in size and location.

All eigenfrequencies arising in the rotating shaft arrangement 14, may be dampened by one or several damping arrangements 1.

When the radial vibrations of the shaft 2 are equal to the first eigenfrequency of the shaft 2, the maximum amplitude of the vibrations arises equidistantly between the first self-aligning radial load bearing 15 and the second self-aligning radial load bearing 16 along the center axis A1, preferably at the center point of the shaft 2. In such an embodiment, the damping arrangement 1 is also arranged equidistantly between the first self-aligning radial load bearing 15 and the second self-aligning radial load bearing 16, as shown in Figs. 3 and 4.

When, instead, the radial vibrations of the shaft 2 are equal to the second eigenfrequency of the shaft 2, the maximum amplitudes arise at 1/4*distance d3 from the first self-aligning radial load bearing 15 and 1/4*distance d3 from the second self-aligning radial load bearing 16, i.e. the maximum amplitudes are offset along the shaft 2 such that they arise between the center point of the shaft 2 and the first self-aligning radial load bearing 15 and between the center point of the shaft 2 and the second self-aligning radial load bearing 16. The distance between the first self-aligning radial load bearing 15 and the maximum amplitude location is 1/4 of the total distance d3 between the first self-aligning radial load bearing 15 and the second self-aligning radial load bearing 16, and the distance between the second self-aligning radial load bearing 16 and the maximum amplitude location is also 1/4 of the total distance d3. In such an embodiment, the damping arrangements 1 are placed such that they too are offset along the shaft 2, locating them at a quarter of distance d3, 1/4*d3, from the first self-aligning radial load bearing 15 along the center axis A1 and at a quarter of the distance d3, 1/4*d3, from the second self-aligning radial load bearing 16 along the center axis A1 (not shown).

If the radial vibrations of the shaft 2 are equal to the third eigenfrequency of the shaft 2, the maximum amplitudes arise at 1/3*distance d3 from the first self-aligning radial load bearing 15, at 2/3*distance d3 from the first bearing 15, and at 1/3*distance d3 from the second self-aligning radial load bearing 16, i.e. the maximum amplitudes are arranged along the shaft 2 such that they arise at the center point of the shaft 2, between the center point of the shaft 2 and the first self-aligning radial load bearing 15, as well as between the center point of the shaft 2 and the second self-aligning radial load bearing 16 (not shown).

The first self-aligning radial load bearing 15 and/or the second self-aligning radial load bearing 16 may be a ball bearing, such as a spherical ball bearing, a journal bearing, a magnetic bearing, or any other type of suitable self-aligning radial load bearing.

One embodiment of the damping arrangement 1, used for damping radial vibrations in the rotating shaft 2, is shown diagrammatically in Figs. 3 and 4, where the damping arrangement 1 is shown in combination with the above-mentioned shaft 2, first self-aligning radial load bearing 15, and second self-aligning radial load bearing 16. Figs. 5 to 9 show further embodiments of the damping arrangement 1 as arranged on the shaft 2.

The damping arrangement 1 comprises at least one first damping element 3, at least one second damping element 4, and a bearing arrangement 5 which operably engages the first damping element 3 and the second damping element 4. As indicated in Fig. 5, the damping arrangement 1 may comprise two oppositely arranged first damping elements 3a, 3b, and two oppositely arranged second damping elements 4a, 4b. The first damping element 3, 3a, 3b, and the second damping element 4, 4a, 4b may be any kind of suitable linear damper. The first damping element 3, 3a, 3b, and the second damping element 4, 4a, 4b may be a single-acting or a double-acting damping element.

In one embodiment (not shown), the damping arrangement 1 comprises one double-acting damping element dampening reciprocating movement along a first radial direction D1, and one double-acting damping element dampening reciprocating movement along a second radial direction D2.

Fig. 5 shows an embodiment comprising two first damping elements 3a, 3b acting along radial direction D1, and two oppositely arranged second damping elements 4a, 4b acting along radial direction D2. "Direction" in this case equates to "axis", i.e. movement along the radial direction D1 includes movement directed towards a first orientation and movement directed towards a second orientation along a first axis, the second orientation being directly opposite to the first orientation.

In other words, the first radial direction D1 refers to two opposite directions extending along one and the same first axis. Correspondingly, the second radial direction D2 refers to two opposite directions extending along one and the same second axis. The first and second axes are not parallel but extend at an angle >0° to each other.

In one embodiment, the second direction D2 is angularly spaced from the first direction D1 by an angle of at least 45° and, most preferably, an angle of approximately 90°. The second direction D2 may, in other words, extend perpendicular to the first direction D1, and to a center axis A1 of the shaft 2, as shown in Fig. 5.

As shown in detail in Figs. 5 to 8, the damping arrangement 1 may comprise two first damping elements 3a, 3b arranged along the first direction D1, on diametrically opposite sides of the center axis A1. Additionally, the damping arrangement 1 may comprise two second damping elements 4a, 4b arranged along the second direction D2, on diametrically opposite sides of the center axis A1. The first damping elements 3a, 3b, and the second damping elements 4a, 4b may be either single-acting or double-acting damping elements.

As mentioned above, the first damping element(s) 3, 3a, 3b and the second damping element(s) 4, 4a, 4b may be linear dampers. However, the first damping element 3 and the second damping element 4 may instead comprise a body of fluid each, such as oil or water.

The bearing arrangement 5 comprises, shown in Figs. 4 & 5, a first bearing member 6, a second bearing member 7, and a reference 8. The reference 8 may also be referred to as a frame or a housing, and the reference 8 is arranged such that it is completely stationary with regards to the shaft, the first bearing member 6, and the second bearing member 7.

The first bearing member 6, the second bearing member 7, and the reference 8 are at least partially arranged in a nesting configuration, shown in particular in Figs. 4 and 5, such that the first bearing member 6 is at least partially enclosed by the second bearing member 7, and the second bearing member 7, in turn, is at least partially enclosed by the reference 8, i.e. the second bearing member 7 being arranged between the first bearing member 6 and the reference 8. By arranging the active components of the bearing arrangement 5, i.e. the first bearing 6 and the second bearing 7, within its passive component, i.e. reference 8, the movement and function of these active components are not affected by other components than the shaft 2.

The first bearing member 6, which also may be referred to as a bearing, is mounted on the shaft 2 so that radial movement of the shaft 2 is transferred to the first bearing member 6. Preferably, the first bearing member 6 is rotatably mounted on the shaft 2 to allow the shaft 2 to rotate relative to the first bearing member 6. The rotation axis of the shaft 2 corresponds to the center axis A1 of the shaft 2.

The second bearing member 7, which also may be referred to as a ring, is operably connected to the first bearing member 6, as described in more detail further below. The first bearing member 6 and the second bearing member 7 may share center axes with the shaft 2, as indicated in e.g. Fig. 8. The first bearing member 6 and the second bearing member 7 may together form a sliding bearing.

Preferably, the first bearing member 6 and the second bearing member 7 are configured to self-align with respect to each other, in the first radial direction D1 and in the second radial direction D2, in response to radial vibrations.

The reference 8 may comprise at least one axial stop 13, for example, two axial stops 13 as shown in Figs. 3 and 4, which axial stop(s) 13 is/are configured to prevent the first bearing member 6 and the second bearing member 7 from moving axially along the center axis A1 of the shaft 2, with respect to the reference 8.

Radial vibrations of the shaft 2, generated as the shaft 2 rotates, may generate reciprocating movement the shaft 2, and subsequently the first bearing member 6, in the first direction D1 and/or reciprocating movement of the shaft 2, the first bearing member 6, and subsequently the second bearing member 7, in the second direction D2. Radial vibrations of the shaft 2, in the second direction D2, may generate reciprocating movement of the first bearing member 6, also in the second direction D2, due to the tight space between the shaft 2 and the first bearing member 6. This in turn generates reciprocating movement of the second bearing member 7 in the second direction D2. As shown in Fig. 5, the first bearing member 6 may be movably arranged along the first direction D1 and the second direction D2, and the second bearing member 7 may be fixedly arranged along the first direction D1, i.e. movably arranged only along the second direction D2. The bearing arrangement 5 may, in other words, be considered to equate to an Oldham coupling.

The reciprocating movement of the first bearing member 6 in the first direction D1 and the reciprocating movement of the second bearing member 7 in the second direction D2 may be such that any size radial vibrations may be dampened. However, in one embodiment, the reciprocating movement of the first bearing member 6 in the first direction D1 may have a maximum amplitude of ±25 % of the shaft 2 diameter from the center axis A1. The reciprocating movement of the second bearing member 7 in the second direction D2 may also have a maximum amplitude of ±25 % of the shaft 2 diameter from the center axis A1.

The first bearing member 6 is operably connected to the second bearing member 7 by the above-mentioned first damping element(s) 3, 3a, 3b, and by a first steering structure 9, shown in Figs. 5 to 7. The first steering structure 9 allows only reciprocating movement of the shaft 2 and the first bearing member 6 in the first radial direction D1. The first damping element 3 dampens this reciprocating movement in the first radial direction D1 with respect to the second bearing member 7.

Correspondingly, the second bearing member 7 is operably connected to the reference 8 by the second damping element(s) 4, 4a, 4b and by a second steering structure 10, also shown in Figs. 5 to 7. The second steering structure 10 allows mainly reciprocating movement of the second bearing member 7, as well as some movement of the shaft 2 and the first bearing member 6, in the second radial direction D2. The second damping element 4 dampens this reciprocating movement in the second radial direction D2 with respect to the reference 8.

The first steering structure 9 and/or the second steering structure 10 may comprise at least two slidingly engaging steering elements, the steering elements preferably being one groove 11 and one protrusion 12, as shown in Figs. 5 to 7.

In one embodiment, shown in Figs. 5 to 7, the second bearing member 7 comprises a plurality of grooves 11, at least one first groove 11a being part of the first steering structure 9, and at least one second groove 11b being part of the second steering structure 10. The first bearing member 6 comprises at least one first protrusion 12a engaging the first groove 11a, and the reference 8 comprises at least one second protrusion 12b engaging the second groove 11b. The embodiments shown in Figs. 5 to 7 disclose two first grooves 11a, two second grooves 11b, two first protrusions 12a, and two second protrusions 12b. The respective combinations of groove 11 and protrusion 12 are preferably equidistantly distributed around the shaft. In one embodiment, two first grooves 11a and two first protrusions 12a are arranged along the first direction D1, and two second grooves 11b and two second protrusions 12b are arranged along the second direction D2.

As shown in particular in Figs. 3 to 5, the first damping element 3 may be at least partially located between the first bearing member 6 and the second bearing member 7 to dampen the reciprocating movement of the first bearing member 6 in the first direction D1. The second damping element 4 may, correspondingly, be at least partially located between the second bearing member 7 and the reference 8 to dampen the reciprocating movement of the second bearing member 7 in the second direction D2.

As mentioned above, the first bearing member 6, the second bearing member 7, and the reference 8 are preferably substantially prismatic in shape, e.g. cylindrical, as also shown in Fig. 5.

As mentioned above, the first damping element 3 and the second damping element 4 may be fluids. In such an embodiment, the bearing arrangement 5 is provided with compartments for holding the fluids, while also allowing the fluids to move, within the compartments, in response to the reciprocating movement of the shaft 2.

Such compartments may be formed by means of peripherally extending recesses (not shown). The first bearing member 6 and the second bearing member 7 may comprise one peripherally extending recess each, each recess being configured to accommodate fluid. In one embodiment, the peripherally extending recesses extend in outer circumferential surfaces of the first bearing member 6 and the second bearing member 7. Nevertheless, the recesses may extend at any part of the interface between the first bearing member 6 and the second bearing member 7, and the interface between the second bearing member 7 and the reference 8. For example, the second bearing member 7 may comprise both a peripherally extending recess, extending in and along the outer peripheral surface of the second bearing member 7 and forming an interface together with an inner circumferential surface of the reference 8, and an internally extending recess, extending in the inner circumferential surface of the second bearing member 7 and forming an interface together with the outer circumferential surface of the first bearing member 6. Furthermore, the inner circumferential surface of the reference 8 may comprise an internally extending recess.

Figs. 10 to 14 illustrate an embodiment of a self-aligning bearing support assembly 15,16. The self-aligning bearing support assembly 1 is particularly suitable for supporting radial loads. The self-aligning bearing support assembly 15,16 is suitable for supporting a rotary or linear bearing and for supporting a linear bearing. The self-aligning bearing support assembly 15,16 is either separate from the supported bearing or an integral part of the supported bearing. The self-aligning bearing support 15,16 is suitable to support e.g. a plain bearing (sliding contact bearing), a hydrodynamic bearing or a roller bearing (for example a deep-groove ball bearing, angular contact ball bearing, a self-aligning ball bearing, a spherical roller bearing, a cylindrical roller bearing, a tapered roller bearing, or a needle roller bearing).

The self-aligning bearing support assembly has a main axis A and comprises an outer sleeve 2 and an inner sleeve 103. The outer sleeve 102 has an axially extending hollow (extending along the main axis A). The inner sleeve 103 has an axially extending bore extending along the main axis A for supporting a rotary or linear bearing or for forming a bearing surface of a rotary or linear bearing. The inner sleeve 103 is at least partially disposed inside the hollow in the outer sleeve 102. Generally, there is a space between the outer side of the inner sleeve 103 and the inner side of the outer sleeve 102. This space is circumferentially divided into four circumferentially separated chambers that are arranged between the inner sleeve 103 and the outer sleeve 102. However, it should be understood that the space between the outside of the inner sleeve 103 and the inside of the outer sleeve 102 can be divided into as few as three chambers and can be divided into more than four chambers. Preferably, the number of chambers is four or a multiple of four. Each chamber is confined in all directions by walls of the assembly 15,16, as will be described in greater detail further below.

The radially inwardly facing wall of a chamber is formed by the inner sleeve 103 and the radially outwardly facing wall of a chamber is formed by the outer sleeve 102. The axially facing walls of a chamber are formed by a (preferably circumferentially non-continuous) first flange 107 and second flange 108. Thus, the chamber is located between two axially facing walls formed by the first and second flange 107,108. Each chamber is circumferentially located between two axially extending separators 104 that form circumferentially facing walls of a chamber.

In the present embodiment, the first flange 107 and the second flange 108 are part of the inner sleeve 103. However, it should be understood that the first flange 107 and the second flange 108 may just as well be part of the outer sleeve 102. Alternatively, a portion of the first flange 107 is part of the inner sleeve 103 and another portion of the first flange 107 is part of the outer sleeve 102. Likewise, in an alternative embodiment, a portion of the second flange 108 is part of the inner sleeve 103 and another portion of the second flange 108 is part of the outer sleeve 102.

The first flange 107 is axially spaced from the second flange 108 by the axial extent of the chambers. The first flange 107 and the second flange 108 have a radial extent that is slightly less than the radial extent of the chambers, so that there is a clearance between the first and second flange 107,108 and the inwardly facing surface of the outer sleeve 102 to allow angular rotation about the midpoint M of the self-aligning bearing assembly 15,16 without the first and second flange 107,108 touching the inner surface of the outer sleeve 102.

Fig. 12 shows an optional bushing 113, but it is understood that the bearing support 15,16 can function without the optional bushing 113. The inner surface of the inner sleeve 103 can act as the bearing surface for a plain bearing (sliding contact bearing) or the inner surface of the sleeve can support a bearing of any suitable type.

In the present embodiment, both the first and second flange 107, 108 are interrupted by four recesses (one for each separator 104) that have a size and shape that allows separators 104 to pass through the recesses with a clearance between the recess and the separator 104. This facilitates assembly of the inner sleeve 103 into the outer sleeve 102. Since the separators 104 have an axial extent that is slightly longer than the axial extent of the chambers and substantially equal to the total axial length of the inner sleeve 103, the separators 104 are received in the recesses in the first and second flange 107,108 when the bearing support 15,16 is assembled. Thus, rotational displacement of the inner sleeve 103 relative to the outer sleeve 102 is restricted to the amount of clearance between the recesses and the separators 104. Preferably, the transition of the edge of the first or second flange 107,108 into the recess is curved, to facilitate rotation of the inner sleeve 103 relative to the outer sleeve 102.

In an embodiment, the inner surface of the outer sleeve 102 is provided with a slight protrusion 115 that is received in a slide shallow recess 116 in the lump 106 that is received in the chamber concerned. The engagement between the slight protrusion 15 and shallow recess 16 locks the lumps 106 axially and circumferentially to the outer sleeve 102.

Each chamber is circumferentially located between two axially extending separators 104, and each chamber is thus delimited at two sides by a substantially circumferentially facing wall of a separator 104. The circumferentially facing walls extend at least nearly the full radial extent of a chamber.

In the embodiment of Fig. 10 to 14 the separators 104 are part of the outer sleeve 102 and are partially received in an axially extending groove 111 in the inner sleeve 103.

The axially extending separators 104 between two circumferentially neighboring chambers circumferentially divide a space between the inner sleeve 103 and the outer sleeve 102 into four circumferentially separated chambers.

The separators 104 extend along the complete axial extent of the chambers and the separators 104 have a radial extent that is at least almost covers the radial extent of the chambers.

The separators 104 have two oppositely directed circumferentially facing surfaces that each form a side of a neighboring chamber. The separators 104 form the circumferential boundaries of the chambers.

In an embodiment, the separator 104 is partially received in an axially extending groove 111. This allows the separator 104 to extend the full radial extent of the chamber. The axially extending groove 111 is deep enough to allow some movement of the inner sleeve 103 relative to the outer sleeve 102, so that angular rotation of the inner sleeve 103 relative to the outer sleeve 102 about the midpoint M can take place without the separator 104 abutting the bottom of the axially extending groove 111.

In a variation of the present embodiment, shown in Fig. 15, the separator 104 is neither a part of the outer sleeve 102 nor of the inner sleeve 102. Instead, there is an axial groove in both the inner and the outer sleeve 102,103 for partially receiving the separator 104 concerned.

In a variation of the present embodiment, shown in Fig. 16, the separator 104 is a part of the inner sleeve 103. In this embodiment, the separator 104 is preferably partially received in an axial groove in the inner surface of the outer sleeve 102.

In an embodiment, one separator 104 can be an integral part of the outer sleeve 102 and another separator 104 can be an integral part of the inner sleeve 103. This arrangement can also be combined with a separator 104 that is neither part of the inner sleeve 103 nor of the outer sleeve 102.

A lump 106 of a substantially incompressible material fills each of the chambers. The lump 106 preferably has, when not deformed, a shape and size that corresponds to the shape and size of the chamber concerned when the inner sleeve 103 is aligned with the outer sleeve 103, i.e. when the main axis A of the inner and outer sleeve coincide.

The chamber concerned substantially completely encloses the lump 106, i.e. the lump 106 is entrapped in the chamber and is prevented from deforming in a way that brings any part of the lump 106 outside of the chamber. Thus, the lump 106 is restrained in all directions, so that it cannot expand. This results in a very high radial stiffness of the bearing support 15,16.

Since the lump 106 is a solid, there is no need for the chamber to be hermetically sealed, i.e. it is acceptable if fluids can enter and escape from the chamber as long as no part of the lump 106 can escape from the chamber.

The lump 106 is elastically deformable but substantially incompressible. Since the incompressible lump 106 completely fills the chamber, the lump 106 prevents change of volume of the chamber, but the lump 106 does not prevent any deformation of the chamber that does not reduce the volume of the chamber. Only a minor force is required to elastically deform the lump 106 for deforming the chamber without decreasing the volume of the chamber. Thus, angular adjustment requires little bending moment, thereby avoiding bending moment on the bearing that is supported or that is an integral part of the bearing support assembly 15,16.

When the inner sleeve 103 angularly rotates as shown in Figs. 17 and 18 about the midpoint M over an angle α, the lumps 106 deform, but the volume of the lumps 106 remains unchanged. Thus, angular rotation about the midpoint M requires little force (bending moment) since it requires only deformation of the lumps 106 and does not require compression of the lumps 106. During angular movement about the midpoint M material of the lump 106 moves from one side to the other side of the lump 106, as if the material of the lump 106 was a viscous fluid. The lump 106 is made of a material that requires little force to deform. This allows the support assembly 15,16 to adjust to misalignment of the bearing without applying any significant bending moment to the bearing.

Thus, the inner sleeve 103 is allowed angular rotation about the midpoint in two orthogonal directions relative to the outer sleeve 102, thereby deforming the lumps 106.

The angular rotation shown in Figs. 17 and 18 is well over 1°, which is more than typically needs to be handled by the bearing support 15,16. However, this exaggerated angle is shown in the Figs. for illustration purposes. In real applications, the angle of rotation would normally be no more than approximately 0,2°. However, such a small angle of rotation would be in nearly impossible to see in the drawings.

General displacement in a radial direction of the inner sleeve 103 relative to the outer sleeve 102 requires a reduction in volume of at least one of the chambers, i.e. compression of the lump 106 in the chamber, and thus is prevented by the incompressibility of the lump 106 in the chamber or chambers concerned. Thus, the bearing support 15,16 is relatively stiff in response to radial loads since a general radial displacement of the inner sleeve 103 relative to the outer sleeve 102 requires compression of one of more of the lumps 106, which these lumps 106 resist since they are essentially incompressible.

The bearing assembly 15,16 allows angular rotation of the inner sleeve 103 relative to the outer sleeve 102 about a radial axis R contained in a radial plane P that intersects with the main axis A at the axial midpoint M of the bearing assembly 15,16, the axial midpoint M of the assembly preferably being (axially) aligned with to an axial midpoint MC of the chambers.

Preferably, the bearing support assembly is designed completely systemically around the midpoint M of the bearing assembly 15,16, so that the bearing support is equally stiff in all linear ad rotational directions. In an embodiment, the inertia of the bearing assembly coincides with the midpoint M.

Thus, the chambers and lumps 106 preferably all have identical shape, size, and material properties, and the chambers are symmetrically arranged around the main axis A and symmetrically around the midpoint M of the bearing support assembly 15,16.

The midpoint M is located on the main axis A and preferably arranged in the middle of the axial extent of the bearing support.

In the present embodiment, the lumps 106 are arch-shaped pads 106 with correspondingly shaped chambers.

The lumps (pads) 106 may be made from a homogeneous material or from a nonhomogeneous material. In an embodiment, the lumps 106 all have identical shape, size, and material properties.

In an embodiment, the lumps (pads) 106 are layered in order to obtain desired characteristics.

Materials that are suitable for use in the lumps 106 are materials that display rubber-like elasticity and that are substantially incompressible, i.e. have a compressibility similar to that of natural rubber, or that are even less compressible.

Rubber-like solids with elastic properties are typically referred to as elastomers. Natural rubber, neoprene rubber, buna-s, and buna-n are all examples of such elastomers. An elastomer has weak intermolecular forces, generally low Young's modulus and high failure strain compared with other materials.

Following is a non-exhaustive list of suitable elastomeric materials for use in the pads 106:
Natural polyisoprene: cis-1,4-polyisoprene natural rubber (NR) and trans-1,4-polyisoprene gutta-percha.
Synthetic polyisoprene (IR for isoprene rubber)
Polybutadiene (BR for butadiene rubber)
Chloroprene rubber (CR), polychloroprene, Neoprene, Baypren etc.
Butyl rubber (copolymer of isobutylene and isoprene, IIR)
Halogenated butyl rubbers (chloro butyl rubber: CIIR; bromo butyl rubber: BIIR)
Styrene-butadiene ubber (copolymer of styrene and butadiene, SBR)
Nitrile rubber (copolymer of butadiene and acrylonitrile, NBR), also called Buna N rubbers
Hydrogenated Nitrile Rubbers (HNBR) Therban and Zetpol
EPM (ethylene propylene rubber, a copolymer of ethylene and propylene) and EPDM rubber (ethylene propylene diene rubber, a terpolymer of ethylene, propylene, and a diene-component)
Epichlorohydrin rubber (ECO),
Polyacrylic rubber (ACM, ABR),
Silicone rubber (SI, Q, VMQ),
Fluorosilicone Rubber (FVMQ),
Fluoroelastomers (FKM, and FEPM) Viton, Tecnoflon, Fluorel, Aflas, and Dai-El,
Perfluoroelastomers (FFKM) Tecnoflon PFR, Kalrez, Chemraz, Perlast, Polyether block amides (PEBA),
Chlorosulfonated polyethylene (CSM), (Hypalon)
Ethylene-vinyl acetate (EVA).

Teflon (PTFE) and PTFE Polymer are also suitable materials for use in the lumps 106.

Suitable materials for the lump 106 preferably have a Poisson's ratio of approximately 0,5. The lumps 106 can be a hybrid of the above listed and/or other suitable materials.

Incompressible elastomers generally have a positive coefficient of thermal expansion. In an embodiment, one or more layers of material with a negative coefficient of thermal expansion are included in the pad or used in the walls surrounding a chamber to at least partially compensate for the thermal expansion of the incompressible elastomers in the lump 106. Examples of materials with a negative thermal coefficient of expansion are e.g. zirconium tungstate. The resulting thermal coefficient of expansion of the lump 106 or the lump/chamber combination is preferably substantially equal to the thermal expansion coefficient of the inner sleeve 103 and the outer sleeve 102 so that temperature changes have minimal impact on the behavior of the bearing support 15,16.

Figs. 19 to 24 illustrate an embodiment of a self-aligning axial load bearing support assembly 201. The self-aligning axial load bearing support assembly 1 is particularly suitable for supporting axial loads. The self-aligning axial load bearing support assembly 1 is suitable for supporting an axial load rotary bearing. The self-aligning axial load bearing support assembly 201 is either separate from the supported axial load bearing or an integral part of the supported axial load bearing. The self-aligning axial load bearing support 201 is suitable to support e.g. a plain bearing (sliding contact bearing), a hydrodynamic bearing, or a roller bearing (for example a deep-groove ball bearing, angular contact ball bearing, a self-aligning ball bearing, a spherical roller bearing, a cylindrical roller bearing, a tapered roller bearing, or a needle roller bearing).

The self-aligning axial load bearing support assembly 201 has a main axis A and comprises a first member 202 and a second member 203. The first member 202 has a first radially extending wall 204. The second member 203 has a second radially extending wall 205.

The first and/or second radially extending wall 204,205 are configured for supporting the axial rotary bearing or for forming a bearing surface of an axial load rotary bearing.

The first radially extending wall 204 is arranged oppositely to the second radially extending wall 205 and the first radially extending wall 204 is axially spaced from the second radially extending wall 205, so that a chamber is formed between walls of the assembly 201. In the present embodiment, both the first member 202 and the second member 203 have a central circular hole of equal diameter for allowing a shaft to pass through the assembly. Both the first and the second member 202, 203 have in the present embodiment a circular outer circumference, although it should be understood that the outer circumference could have any other desired shape.

In the present embodiment, the second member 203 is provided with an outer circumferential wall 207 surrounding the chamber. In the present embodiment, the outer circumferential wall 207 is an integral part of the second member 203, but it should be understood that the outer circumferential wall 207 can be a separate (unconnected) element or be an integral part of the first member 202.

The present embodiment the first member 202 is provided with an inner circumferential wall 208. In the present embodiment, the inner circumferential wall 208 is an integral part of the first member 202, but it should be understood that the inner circumferential wall 208 can be a separate (unconnected) element or be an integral part of the first member 202.

The first radially extending wall 204 and the second radially extending wall 205 do not need to be perfectly radially extending, they can be somewhat conical, convex, concave, and/or undulating as long as they provide the function of providing a wall that has a radial extent towards the outer circumferential wall 207 (in the present embodiment an extent from the inner circumferential wall 208 to the outer circumferential wall 207).

In the present embodiment, the first member 202 is provided with two tabs 209 that project radially from the outer circumference of the first member 202 to and are received in corresponding recesses in the outer circumferential wall 207. The engagement between the tabs 209 and the recesses in the outer circumferential wall 207 ensures that the first and second member 202, 203 cannot rotate relative to one another. It should be understood that one tab 209 is sufficient to prevent relative rotation between the first and second members 202, 203. It should also be understood that the assembly could have more than 202 tabs and corresponding recesses to prevent relative rotation between the first and second members 202, 203.

In the present embodiment, the inner diameter of the outer circumferential wall 207 is substantially identical to the outer diameter of the first member 202. Thus, the first radio wall fits with a small clearance inside the outer circumferential wall 207. the outer diameter of the inner circumferential wall 208 is slightly less than the diameter of the hole in the second member 203. Thus, the inner circumferential wall 208, fits with a small clearance in the hole in the second member 203.

The chamber is formed between the first and second radial walls 204,205 and the outer and inner circumferential walls 207, 208, with two small circumferential clearances between the first member 202 and the second member 203. Thus, the axially inwardly facing walls of the chamber are formed by the first and second parallel walls 204, 205, the radially inwardly facing wall of the chamber is formed by the outer circumferential wall 207, and the radially outwardly facing wall of the chamber is formed by the inner circumferential wall 208.

In an embodiment, the self-aligning axial load bearing assembly 201 is provided with a first narrow gap (clearance) between the outer circumferential wall 207 and at least one of the first radially extending wall 204 or the second radially extending wall 205, the narrow gap being either an annular gap or a radial gap, and with a second narrow gap (clearance) between the inner circumferential wall 208 and at least one of the first radially extending wall 204 or the second radially extending wall 205, the second narrow gap being either an annular gap or a radial gap.

In the present embodiment, the chamber is ring-shaped, i.e. shaped like an annulus.

A lump 206 of a substantially incompressible material fills the chamber, with the chamber substantially completely enclosing the lump 206. Preferably, the lump 206 has, when it is not deformed state, a shape, and size that corresponds to the shape and size of the chamber when the first member 202 and the second member 203 are arranged parallelly, i.e. with their respective radial walls parallelly, as shown in Fig. 23. Thus, in the present embodiment, the lump 206 is preferably ring-shaped, with the lump 206 having in its non-deformed state having a size and shape corresponding to that of the chamber when the first and second members 202, 203 are aligned (parallel). When the first and second members 202, 203 are aligned, the main axis of the first member 202 and main axis of the second member 203 coincide with one another and with the main axis A of the self-aligning axial load bearing assembly 201.

The height (axial extent) of the lump 206 is chosen such that it fills the chamber in the axial direction to an extent that causes a small clearance to be present between tab 209 and the bottom of the recess in which it is received. This clearance is needed to allow one side of the first member 202 to rotate towards the second member 203 whilst the other side of the first member rotates away from the second member 203.

The total volume of the chamber changes when said first member 202 moves axially relative to the second member 203. However, the lump 206 is substantially incompressible, and therefore, the lump 206 resists any reduction in volume reduction of the chamber, and thus, the first and second members 202, 203 are prevented from moving axially towards each other due to the incompressibility of the lump 206.

However, the total volume of the chamber does not change when said first member 202 rotates relative to said second member 203 about any radial axis through the self-aligning axial load bearing assembly 201. The material of the lump is deformable, despite being substantially incompressible. Thus, the lump 206 allows rotation of the first member 202, relative to the second member about any radial axis through the assembly, only resisting the rotation by the force that is required to deform the lump 206. Thus, this force resisting relative rotation of the first member 202 relative to the second member 203 is determined by the elasticity of the lump 206.

Thus, first member 202 is allowed to rotate relative to the second member 203 about a radial axis through the self-aligning axial load bearing assembly 201, thereby deforming said lump 206 without compressing the lump 206 and thereby allows the self-aligning axial load bearing assembly 201 to align against a relatively small rotational force (bending moment) caused by deformation of the lump 206, whilst providing high axial rigidity of the self-aligning axial load bearing assembly 201 due to the incompressibility of the lump 206.

The chamber substantially completely encloses the lump 206, i.e. the lump 206 is entrapped in the chamber and the lump 206 is prevented from deforming in a way that brings any part of the lump 206 outside of the chamber. Thus, the lump 206 is restrained in all directions, so that it cannot expand. This results in a high radial stiffness of the self-aligning axial load bearing assembly 201 against compression (the first and second members 202, 203 moving towards each other).

Since the lump 206 is a solid, there is no need for the chamber to be hermetically sealed, i.e. it is acceptable if fluids can enter and escape from the chamber as long as no part of the lump 206 can escape from the chamber.

The lump 206 is elastically deformable but substantially incompressible. Since the incompressible lump 206 completely fills the chamber, the lump 206 prevents reduction in volume of the chamber, but the lump 206 does not prevent any deformation of the chamber that does not reduce the volume of the chamber.

Only a minor force is required to elastically deform the lump 206 for deforming the chamber without decreasing the volume of the chamber. Thus, angular adjustment requires little bending moment, thereby avoiding bending moment on the axial bearing that is supported or that is an integral part of the self-aligning axial load bearing assembly 201.

When the first member 202 rotates as shown in Fig. 24 about a radial axis through the self-aligning axial load bearing assembly 201 over an angle α, the lump 206 deform, but the volume of the lump 206 remains unchanged. Thus, angular rotation about a radial axis through the self-aligning axial load bearing assembly 201 requires little force (bending moment) since it requires only deformation of the lump 206 and does not require compression of the lump 206. During angular movement about any radial axis through the assembly, material of the lump 206 moves from one side to the other side of the lump 206, as if the material of the lump 206 was a viscous fluid. The lump 206 is made of material that requires relatively little force to deform. This allows the self-aligning axial load bearing assembly 201 to adjust to misalignment of the bearing without applying any significant bending moment to the supported axial load bearing.

Thus, the first member 202 is allowed angular rotation relatively to the second member 203 about any radial axis though the self-aligning axial load bearing assembly 201 (and vice versa), thereby deforming the lump 206.

The angular rotation as shown in Fig. 24 is over 1°, which is more than typically needs to be handled by the self-aligning axial load bearing assembly 201. However, this exaggerated angle is shown in Fig. 24 for illustration purposes. In real applications, the angle of rotation would normally be no more than approximately 0,2°. However, such a small angle of rotation would be nearly impossible to see in the drawings.

General displacement in an axial direction of the first member 202 relative to the second member 203 requires a reduction in volume of the chamber, i.e. compression of the lump 206 in the chamber, and thus is prevented by the incompressibility of the lump 206 in the chamber. Thus, the self-aligning axial load bearing assembly 201 is relatively stiff in response to radial loads, since a general radial displacement of the first member 202 relative to the second member 203 requires compression of the lump 206, which the lump 206 resists since they are essentially incompressible.

The lump 206 may be made from a homogeneous material or from a nonhomogeneous material.

In an embodiment, the lump 206 is layered in order to obtain desired characteristics. This embodiment is illustrated in the embodiment of Fig. 21. The lump 206 is layered in the axial direction. The layers are selected with the respective properties of the layers such that the combination results in the required characteristics of the lump 206.

Materials that suitable for use in the lump 206 are the same as described above for the lump 106.

Figs. 25 to 27 illustrate another embodiment of the self-aligning axial load bearing assembly 201. In the embodiment of Fig. 25, the self-aligning axial load bearing assembly 210 comprises a slide bearing (hydrodynamic bearing). In the embodiment of Figs. 26 and 27 the self-aligning axial load bearing assembly to 201 comprises a ball bearing.

Figs. 28 and 29 are examples of how the self-aligning axial load bearing assembly 201 is applied in a rotating shaft arrangement.

Figs. 30 to 32 show another embodiment of the self-aligning axial load bearing support assembly 201. In this embodiment, structures and features that are the same or similar to corresponding structures and features previously described or shown herein are denoted by the same reference numeral as previously used for simplicity. The bearing support 201 according to this embodiment is constructed according to the same principles as the bearing support 201 described with reference to Figs. 19 to 24. However, neither the first member 202 nor the second member 203 is provided with a central hole and hence there is no need for an inner circumferential wall. Preferably, the bearing support assembly 201 is essentially disk-shaped, and so is the chamber, as well as the lump 206. This embodiment does not allow a shaft to pass through the support assembly 201 and can be used as the bearing support assembly 201 when there is no need for a shaft to pass through the bearing support assembly.

Fig. 33 shows another embodiment of the bearing support 201. In this embodiment, structures and features that are the same or similar to corresponding structures and features previously described or shown herein are denoted by the same reference numeral as previously used for simplicity. The bearing support 201 according to this embodiment is constructed according to the same principles as the bearing support 201 described with reference to Figs. 19 to 24. However, in the embodiment of Fig. 33, both the outer circumferential wall 207 and the inner circumferential wall 208 are an integral part of the second member 203. The first member 202 is thus shaped like a ring, i.e. a disk with a central circular hole. In the shown embodiment the second member 203 fits between the outer circumferential wall 207 and the inner circumferential wall 208, but it should be understood that it would also be possible to it is also possible to construct the assembly with the outer diameter of the first member 202 being equal to the outer diameter of the outer circumferential wall 207 and the inner diameter of the first member being equal to the inner diameter of the inner circumferential wall 208. In this embodiment, the lump 206 is ring-shaped with a shape and size that matches the chamber defined between the first and second members 202, 203.

The support assembly 201 is rigid to compression in the axial direction. Since the support assembly 201 only can handle compression load, an axial load bearing that needs to accommodate axial loads in both directions requires two oppositely arranged support assemblies, as for example shown in the embodiments of the Figs. 9 and 10.

According to an embodiment, the support assembly supports an object that is not a bearing, such as e.g. a bolt, and forms e.g. a washer, or a column (either rotating or nonrotating), where the load needs to be distributed on the underlying structure.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A rotating shaft arrangement (14) comprising a shaft (2) having an axial extent,
said shaft (2) being radially supported by a first self-aligning radial load rotary bearing assembly (15) and radially supported by a second self-aligning radial load rotary bearing assembly (16),
said second self-aligning radial load rotary bearing assembly (16) being axially spaced from said first self-aligning radial load rotary bearing assembly (15), and
said shaft (2) being axially supported by a first self-aligning axial load rotary bearing (201),
c h a r a c t e r i s e d in that
said first self-aligning axial load rotary bearing (201) comprising:
a first member (202) with a first wall (204), said first wall (204) having a substantially radial main extent and a second member (203) with a second wall (205), said second wall (205) having a substantially radial main extent,
said first wall (204) being axially spaced from said second wall (205),
a chamber formed between walls of said first self-aligning axial load rotary bearing (201),
an outer circumferential wall (207) surrounding said chamber,
said chamber being confined in all directions by walls of said first self-aligning axial load rotary bearing (201),
said first or second wall (204,205) being configured for supporting said first self-aligning axial load rotary bearing (201) or for forming a bearing surface of said first self-aligning axial load rotary bearing (201),
a first lump (206) of a substantially incompressible material filling said chamber, with the chamber substantially completely enclosing said first lump (206).

2. The rotating shaft arrangement (14) according to claim 1, wherein said first lump (206) is formed of a material with a Poisson's ratio of approximately 0,5.

3. The rotating shaft arrangement (14) according to claim 1 or 2, wherein there is a first narrow gap between said outer circumferential wall (207) and at least one of said first wall (204) or said second wall (205), said narrow gap being either an annular gap or a radial gap and wherein there is a second narrow gap between said inner circumferential wall (208) and at least one of said first wall (204) or said second wall (205), said second narrow gap being either an annular gap or a radial gap.

4. The rotating shaft arrangement (14) according to claim 1, wherein said first and/or second self-aligning radial load rotary bearing assembly (15,16) comprises an outer sleeve (102) and an inner sleeve (103) at least partially disposed in said outer sleeve (102),
said inner sleeve (103) having an axially extending bore for supporting a rotary or linear bearing or for forming a bearing surface of a radial load rotary or linear bearing,
three or more circumferentially separated chambers formed between said inner sleeve (103) and said outer sleeve (102),
each chamber being substantially confined in all directions by walls of said first or second self-aligning radial load rotary bearing assembly (15,16),
a second lump (106) of a substantially incompressible material filling each of said at least three chambers, with the chamber concerned substantially completely enclosing said second lump (106).

5. The rotating shaft arrangement (14) according to any one of claims 1 to 4, comprising a damping arrangement (1) configured for damping radial vibrations in said rotating shaft (2), said damping arrangement engaging said shaft at an axial position located between said first self-aligning radial load rotary bearing assembly (15) and said second self-aligning radial load rotary bearing assembly (16).

6. The rotating shaft arrangement (14) according to claim 5, wherein said damping arrangement (1) comprises: at least one first damping element (3), at least one second damping element (4), and a bearing arrangement (5) operably engaging said first damping element (3) and said second damping element (4).

7. The rotating shaft arrangement (14) according to claim 6, wherein said bearing arrangement (5) comprises: a first bearing member (6), a second bearing member (7), and a reference (8), at least partially arranged in a nesting configuration.

8. The rotating shaft arrangement (14) according to claim 7, wherein said first bearing member (6) is rotatably mounted on said shaft (2) so that radial movement of said shaft (2) is transferred to said first bearing member (6),
said first bearing member (6) being operably connected to said second bearing member (7) by said first damping element (3) and by a first steering structure (9),
said first steering structure (9) allowing only reciprocating movement of said first bearing member (6), and said shaft (2), in a first radial direction (D1), and said first damping element (3) dampening said reciprocating movement in said first radial direction (D1) with respect to said second bearing member (7),
said second bearing member (7) being operably connected to said reference (8) by said second damping element (4) and by a second steering structure (10),
said second steering structure (10) allowing only reciprocating movement of said second bearing member (7), said first bearing member (6), and said shaft (2), in a second radial direction D2, and said second damping element (4) dampening said reciprocating movement in said second radial direction (D2) with respect to said reference (8).

9. A rotating shaft arrangement (14) according to any one of claims 5 to 8, wherein said shaft (2), said first self-aligning radial load rotary bearing assembly (15), said second self-aligning radial load rotary bearing assembly (16), and said damping arrangement (1) share center axis (A1),
said first self-aligning radial load rotary bearing assembly (15) and said second self-aligning radial load rotary bearing assembly (16) being separated by a distance (d3) along said center axis (A1),
said damping arrangement(s) (1) being arranged between said first self-aligning radial load rotary bearing assembly (15) and said second self-aligning radial rotary bearing assembly (16) at a location, along said center axis (A1), where the radial vibrations of said shaft (2) have a maximum amplitude.

## Patentansprüche

1. Drehwellenanordnung (14), umfassend eine Welle (2) mit einer axialen Erstreckung,
wobei die Welle (2) radial von einer ersten selbstausrichtenden Radiallast-Drehlagerbaugruppe (15) getragen und radial von einer zweiten selbstausrichtenden Radiallast-Drehlagerbaugruppe (16) getragen wird,
wobei die zweite selbstausrichtende Radiallast-Drehlagerbaugruppe (16) von der ersten selbstausrichtenden Radiallast-Drehlagerbaugruppe (15) axial beabstandet ist, und
wobei die Welle (2) axial von einem ersten selbstausrichtenden Axiallast-Drehlager (201) getragen wird,
**dadurch gekennzeichnet, dass**
das erste selbstausrichtende Axiallast-Drehlager (201) umfasst:
ein erstes Element (202) mit einer ersten Wand (204), wobei die erste Wand (204) eine im Wesentlichen radiale Haupterstreckung aufweist, und ein zweites Element (203) mit einer zweiten Wand (205), wobei die zweite Wand (205) eine im Wesentlichen radiale Haupterstreckung aufweist,
wobei die erste Wand (204) axial von der zweiten Wand (205) beabstandet ist,
eine Kammer, die zwischen Wänden des ersten selbstausrichtenden Axiallast-Drehlagers (201) gebildet ist,
eine Außenumfangswand (207), die die Kammer umgibt,
wobei die Kammer in allen Richtungen durch Wände des ersten selbstausrichtenden Axiallast-Drehlagers (201) begrenzt ist,
wobei die erste oder die zweite Wand (204, 205) zum Tragen des ersten selbstausrichtenden Axiallast-Drehlagers (201) oder zum Bilden einer Lagerfläche des ersten selbstausrichtenden Axiallast-Drehlagers (201) konfiguriert ist,
wobei ein erster Klumpen (206) eines im Wesentlichen nicht komprimierbaren Materials die Kammer füllt, wobei die Kammer den ersten Klumpen (206) im Wesentlichen vollständig umschließt.

2. Drehwellenanordnung (14) nach Anspruch 1, wobei der erste Klumpen (206) aus einem Material mit einer Poissonzahl von ungefähr 0,5 hergestellt ist.

3. Drehwellenanordnung (14) nach Anspruch 1 oder 2, wobei eine erste schmale Lücke zwischen der Außenumfangswand (207) und mindestens einer von der ersten Wand (204) oder der zweiten Wand (205) vorliegt, wobei die schmale Lücke entweder eine ringförmige Lücke oder eine radiale Lücke ist und wobei eine zweite schmale Lücke zwischen der Innenumfangswand (208) und mindestens einer von der ersten Wand (204) oder der zweiten Wand (205) vorliegt, wobei die zweite schmale Lücke entweder eine ringförmige Lücke oder eine radiale Lücke ist.

4. Drehwellenanordnung (14) nach Anspruch 1, wobei die erste und/oder die zweite selbstausrichtende Radiallast-Drehlagerbaugruppe (15, 16) eine Außenmanschette (102) und eine Innenmanschette (103), die zumindest zum Teil in der Außenmanschette (102) angeordnet ist, umfasst,
wobei die Innenmanschette (103) eine sich axial erstreckende Bohrung zum Tragen eines Dreh- oder Linearlagers oder zum Bilden einer Lagerfläche eines Radiallast-Dreh- oder -Linearlagers aufweist,
wobei drei oder mehr umfänglich getrennte Kammern zwischen der Innenmanschette (103) und der Außenmanschette (102) gebildet sind,
wobei jede Kammer in allen Richtungen durch Wände der ersten oder der zweiten selbstausrichtenden Radiallast-Drehlagerbaugruppe (15, 16) im Wesentlichen begrenzt ist,
wobei ein zweiter Klumpen (106) eines im Wesentlichen nicht komprimierbaren Materials jede der mindestens drei Kammern füllt, wobei die betreffende Kammer den zweiten Klumpen (106) im Wesentlichen vollständig umschließt.

5. Drehwellenanordnung (14) nach einem der Ansprüche 1 bis 4, umfassend eine Dämpfungsanordnung (1), die zum Dämpfen radialer Schwingungen in der Drehwelle (2) konfiguriert ist, wobei die Dämpfungsanordnung die Welle in einer axialen Position in Eingriff nimmt, die sich zwischen der ersten selbstausrichtenden Radiallast-Drehlagerbaugruppe (15) und der zweiten selbstausrichtenden Radiallast-Drehlagerbaugruppe (16) befindet.

6. Drehwellenanordnung (14) nach Anspruch 5, wobei die Dämpfungsanordnung (1) umfasst: mindestens ein erstes Dämpfungselement (3), mindestens ein zweites Dämpfungselement (4) und eine Lageranordnung (5), die das erste Dämpfungselement (3) und das zweite Dämpfungselement (4) funktionsfähig in Eingriff nimmt.

7. Drehwellenanordnung (14) nach Anspruch 6, wobei die Lageranordnung (5) umfasst: ein erstes Lagerelement (6), ein zweites Lagerelement (7) und eine Referenz (8), zumindest zum Teil in einer Verschachtelungskonfiguration eingerichtet.

8. Drehwellenanordnung (14) nach Anspruch 7, wobei das erste Lagerelement (6) drehbar an der Welle (2) montiert ist, so dass eine radiale Bewegung der Welle (2) an das erste Lagerelement (6) übertragen wird,
wobei das erste Lagerelement (6) durch das erste Dämpfungselement (3) und durch eine erste Lenkstruktur (9) funktionsfähig mit dem zweiten Lagerelement (7) verbunden ist,
wobei die erste Lenkstruktur (9) nur eine Hin- und Herbewegung des ersten Lagerelements (6) und der Welle (2) in einer ersten Radialrichtung (D1) zulässt, und das erste Dämpfungselement (3) die Hin- und Herbewegung in der ersten Radialrichtung (D1) in Bezug auf das zweite Lagerelement (7) dämpft,
wobei das zweite Lagerelement (7) durch das zweite Dämpfungselement (4) und durch eine zweite Lenkstruktur (10) funktionsfähig mit der Referenz (8) verbunden ist,
wobei die zweite Lenkstruktur (10) nur eine Hin- und Herbewegung des zweiten Lagerelements (7), des ersten Lagerelements (6) und der Welle (2) in einer zweiten Radialrichtung D2 zulässt, und das zweite Dämpfungselement (4) die Hin- und Herbewegung in der zweiten Radialrichtung (D2) in Bezug auf die Referenz (8) dämpft.

9. Drehwellenanordnung (14) nach einem der Ansprüche 5 bis 8, wobei sich die Welle (2), die erste selbstausrichtende Radiallast-Drehlagerbaugruppe, die zweite selbstausrichtende Radiallast-Drehlagerbaugruppe (16) und die Dämpfungsanordnung (1) eine Mittelachse (A1) teilen,
wobei die erste selbstausrichtende Radiallast-Drehlagerbaugruppe (15) und die zweite selbstausrichtende Radiallast-Drehlagerbaugruppe (16) durch einen Abstand (d3) entlang der Mittelachse (A1) getrennt sind,
wobei die Dämpfungsanordnung(en) (1) zwischen der ersten selbstausrichtenden Radiallast-Drehlagerbaugruppe (15) und der zweiten selbstausrichtenden Radiallast-Drehlagerbaugruppe (16) an einer Stelle entlang der Mittelachse (A1), wo die radialen Schwingungen der Welle (2) eine maximale Amplitude aufweisen, eingerichtet sind.

## Revendications

1. Agencement d'arbre tournant (14) comprenant un arbre (2) ayant une étendue axiale,
ledit arbre (2) étant supporté radialement par un premier ensemble (15) palier rotatif à charge radiale à alignement automatique et supporté radialement par un second ensemble (16) palier rotatif à charge radiale à alignement automatique,
ledit second ensemble (16) palier rotatif à charge radiale à alignement automatique étant axialement espacé dudit premier ensemble (15) palier rotatif à charge radiale à alignement automatique, et
ledit arbre (2) étant supporté axialement par un premier palier (201) rotatif à charge axiale à alignement automatique,
**caractérisé en ce que**
ledit premier palier (201) rotatif à charge axiale à alignement automatique comprend :
un premier organe (202) avec une première paroi (204), ladite première paroi (204) ayant une extension principale sensiblement radiale, et un second organe (203) avec une seconde paroi (205), ladite seconde paroi (205) ayant une extension principale sensiblement radiale,
ladite première paroi (204) étant axialement espacée de ladite seconde paroi (205),
une chambre formée entre les parois dudit premier palier (201) rotatif à charge axiale à alignement automatique,
une paroi circonférentielle extérieure (207) entourant ladite chambre,
ladite chambre étant confinée dans toutes les directions par les parois dudit premier palier (201) rotatif à charge axiale à alignement automatique,
ladite première ou seconde paroi (204, 205) étant configurée pour supporter ledit premier palier (201) rotatif à charge axiale à alignement automatique ou pour former une surface d'appui dudit premier palier (201) rotatif à charge axiale à alignement automatique,
un premier bloc (206) d'un matériau sensiblement incompressible remplissant ladite chambre, la chambre enfermant sensiblement complètement ledit premier bloc (206).

2. Agencement d'arbre tournant (14) selon la revendication 1, dans lequel ledit bloc (206) est formé d'un matériau avec un nombre de Poisson d'environ 0,5.

3. Agencement d'arbre rotatif (14) selon la revendication 1 ou 2, dans lequel il existe un premier espace étroit entre ladite paroi circonférentielle extérieure (207) et au moins l'une parmi ladite première paroi (204) ou ladite seconde paroi (205), ledit espace étroit étant soit un espace annulaire, soit un espace radial, et dans lequel il existe un second espace étroit entre ladite paroi circonférentielle intérieure (208) et au moins l'une parmi ladite première paroi (204) ou ladite seconde paroi (205), ledit second espace étroit étant soit un espace annulaire, soit un espace radial.

4. Agencement d'arbre tournant (14) selon la revendication 1, dans lequel ledit premier et/ou second ensemble (15, 16) palier rotatif à charge radiale à alignement automatique comprend un manchon extérieur (102) et un manchon intérieur (103) disposé au moins partiellement dans ledit manchon extérieur (102),
ledit manchon intérieur (103) présentant un alésage s'étendant axialement pour supporter un palier rotatif ou linéaire ou pour former une surface d'appui d'un palier rotatif ou linéaire à charge radiale,
trois ou plus de trois chambres séparées circonférentiellement formées entre ledit manchon intérieur (103) et ledit manchon extérieur (102),
chaque chambre étant sensiblement confinée dans toutes les directions par les parois dudit premier ou second ensemble (15, 16) palier rotatif à charge radiale à alignement automatique,
un second bloc (106) d'un matériau sensiblement incompressible remplissant chacune desdites au moins trois chambres, la chambre concernée enfermant sensiblement complètement ledit second bloc (106).

5. Agencement d'arbre tournant (14) selon l'une quelconque des revendications 1 à 4, comprenant un agencement d'amortissement (1) configuré pour amortir les vibrations radiales dans ledit arbre tournant (2), ledit agencement d'amortissement mettant en prise ledit arbre ai niveau d'une position axiale située entre ledit premier ensemble (15) palier rotatif à charge radiale à alignement automatique et ledit second ensemble (16) palier rotatif à charge radiale à alignement automatique.

6. Agencement d'arbre tournant (14) selon la revendication 5, dans lequel ledit agencement d'amortissement (1) comprend : au moins un premier élément d'amortissement (3), au moins un second élément d'amortissement (4) et un agencement de palier (5) mettant en prise de manière fonctionnelle ledit premier élément d'amortissement (3) et ledit second élément d'amortissement (4).

7. Agencement d'arbre tournant (14) selon la revendication 6, dans lequel ledit agencement de palier (5) comprend : un premier organe palier (6), un second organe palier (7) et une référence (8), au moins partiellement agencés dans une configuration d'emboîtement.

8. Agencement d'arbre tournant (14) selon la revendication 7, dans lequel ledit premier organe palier (6) est monté rotatif sur ledit arbre (2) de sorte que le mouvement radial dudit arbre (2) est transféré audit premier organe palier (6),
ledit premier organe palier (6) étant relié de manière fonctionnelle audit second organe palier (7) par ledit premier élément d'amortissement (3) et par une première structure de direction (9),
ladite première structure de direction (9) permettant uniquement un mouvement alternatif dudit premier organe palier (6) et dudit arbre (2), dans une première direction radiale (D1), et ledit premier élément d'amortissement (3) amortissant ledit mouvement alternatif dans ladite première direction radiale (D1) par rapport audit second organe palier (7),
ledit second organe palier (7) étant relié de manière fonctionnelle à ladite référence (8) par ledit second élément d'amortissement (4) et par une seconde structure de direction (10),
ladite seconde structure de direction (10) permettant uniquement un mouvement alternatif dudit second organe palier (7), dudit premier organe palier (6) et dudit arbre (2), dans une seconde direction radiale (D2), et ledit second élément d'amortissement (4) amortissant ledit mouvement alternatif dans ladite seconde direction radiale (D2) par rapport à ladite référence (8).

9. Agencement d'arbre tournant (14) selon l'une quelconque des revendications 5 à 8, dans lequel ledit arbre (2), ledit premier ensemble (15) palier rotatif à charge radiale à alignement automatique, ledit second ensemble (16) palier rotatif à charge radiale à alignement automatique et ledit agencement d'amortissement (1) partagent un axe central (A1),
ledit premier ensemble (15) palier rotatif à charge radiale à alignement automatique et ledit second ensemble (16) palier rotatif à charge radiale à alignement automatique étant séparés par une distance (d3) le long dudit axe central (A1),
ledit(lesdits) agencement(s) d'amortissement (1) étant agencé(s) entre ledit premier ensemble (15) palier rotatif à charge radiale à alignement automatique et ledit second ensemble (16) palier rotatif à charge radiale à alignement automatique au niveau d'un emplacement, le long dudit axe central (A1), où les vibrations radiales dudit arbre (2) ont une amplitude maximale.
